(19) **Europäisches Patentamt**

**European Patent Office**

**Office européen des brevets**

(11) Veröffentlichungsnummer: **0 282 983 B1**

(12) # EUROPÄISCHE PATENTSCHRIFT

(45) Veröffentlichungstag der Patentschrift: **02.01.92**

(51) Int. Cl.⁵: **B62D  21/18**

(21) Anmeldenummer: **88104135.4**

(22) Anmeldetag: **16.03.88**

(54) **Fahrgestellrahmen.**

(30) Priorität: **18.03.87 DE 3708702**

(43) Veröffentlichungstag der Anmeldung:
**21.09.88 Patentblatt  88/38**

(45) Bekanntmachung des Hinweises auf die
Patenterteilung:
**02.01.92 Patentblatt  92/01**

(84) Benannte Vertragsstaaten:
**AT BE CH DE ES FR GB IT LI LU NL**

(56) Entgegenhaltungen:
**DE-A- 3 443 908**
**DE-B- 1 129 842**
**US-A- 4 533 010**

(73) Patentinhaber: **Hoffmann, Heinz-Rainer,
Dipl.-Ing.
Eichendorffstrasse 9
W-3456 Eschershausen(DE)**

(72) Erfinder: **Hoffmann, Heinz-Rainer, Dipl.-Ing.
Eichendorffstrasse 9
W-3456 Eschershausen(DE)**

(74) Vertreter: **Sobisch, Peter, Dipl.-Ing. et al
Patentanwälte Dipl.-Inge. Röse, Kosel & Sobisch Odastrasse 4a Postfach 129
W-3353 Bad Gandersheim 1(DE)**

## Beschreibung

Die Erfindung bezieht sich auf Fahrgestellrahmen entsprechend den Oberbegriffen der Ansprüche 1 bzw. 3.

Die Fahrgestellrahmen von beispielsweise landwirtschaftlichen Kippanhängern sollen grundsätzlich eine gewisse Formelastizität aufweisen, so daß bei Geländefahrt Anpassungen an unterschiedliche Bodenkonturen und ein sicheres Aufliegen auf sämtlichen vier Rädern gewährleistet ist. Die sich hieraus ergebende torsionsweiche Ausgestaltung des Fahrgestellrahmens beeinträchtigt jedoch unter bestimmten Bedingungen während des Kippvorgangs die Standsicherheit des Anhängers und bringt ein beträchtliches Unfallrisiko mit sich. Bei einer um eine Querachse nach hinten ankippbaren Ladebrücke liegt ein besonders kritischer Betriebszustand dann vor, wenn bei angekippter Ladebrücke sich die Ladung außermittig im vorderen Teil derselben befindet. Bei einem torsionsweichen Fahrgestellrahmen besteht hierbei die Gefahr, daß das Umkippmoment zum größten Teil von der Hinterachse aufgenommen werden muß, welches bei einem Untergrund von geringerer Tragfähigkeit zum Einbrechen eines Rades und damit zum Umsturz des Hängers führen kann. Weitere, die Standsicherheit derartiger Kippanhänger beeinflussende Konstruktionsgrößen sind die Federungen der Räder, die Radspurweiten sowie die Höhe des Schwerpunktes des Kippanhängers über dessen Aufstandfläche. Eine Verbesserung der Standsicherheit von Anhängern über die entsprechende Dimensionierung dieser Größen sind doch verhältnismäßig enge Grenzen gesetzt. Ein wesentlicher Faktor zur Verbesserung der Standsicherheit bleibt somit die Torsionssteifigkeit des Fahrgestellrahmens, welche entsprechend dem Betriebszustand des Anhängers unterschiedlich bemessen sein muß. Während für den Fahrzustand eine verhältnismäßig geringe Torsionssteifigkeit gefordert wird, muß für den Kippzustand für eine große Torsionssteifigkeit gesorgt werden, um die gleichmäßige Abstützung des Hängers auf Vorder- und Hinterachse zu erreichen.

Aus der DE-A- 34 43 908 ist ein Lastfahrzeug mit einem in Längsrichtung angeordneten Torsionselement bekannt, dessen Zweck darin besteht, dem Fahrzeugrahmen beim Be-und Entladen eine große Torsionssteifigkeit zu geben, wohingegen im Fahrzustand des Fahrzeugs der Fahrgestellrahmen eine gewisse Elastizität aufweist. Dies wird dadurch erreicht, daß das Torsionselement, ein rohrförmiger Körper an einem Ende desselben mit dem Fahrgestell in Verbindung steht und an seinem anderen Ende über eine hydraulisch schaltbare Kupplung starr an das Fahrgestell ankuppelbar ist bzw. dadurch, daß beide Enden des Torsionselements gleichzeitig mittels einer hydraulisch schaltbaren Kupplung starr an das Fahrgestell angekuppelt werden können. Durch eine derartige Kupplung kann die jeweils gewünschte Torsionssteifigkeit des Fahrgestellrahmens entsprechend diesen beiden Betriebszuständen willkürlich geschaltet werden. Das Kupplungselement besteht aus einem festen, an dem Fahrgestellrahmen angeordneten Bauteil und einem beweglichen, zwecks Einrückens in das feste, verschiebbare Bauteil, wobei zur Betätigung des verschiebbaren Bauteils eine druckmittelbetätigte Kolben-Zylinder-Einheit vorgesehen ist, die mit einer Verdrehungsmeßeinrichtung, einer Steuerschaltung oder dergleichen zusammenwirkt und von dem jeweiligen Benutzer durch Betätigung entsprechender Steuerglieder oder auch automatisch aktivierbar ist. Ein Einrücken des beweglichen Bauteils in das fest angeordnete Bauteil erfolgt stets in einem den Längsträgern benachbarten Bereich des Fahrgestellrahmens, somit an einer Stelle, an der mit maximalen Verwindungswegen zu rechnen ist. Das bewegliche Bauteil ist horizontal verschiebbar gelagert. Eine solche Ausgestaltung und Anordnung eines schaltbaren Kupplungselements eines Torsionsrohres führt mit Hinblick auf einen einwandfreien Schaltvorgang entweder zu konstruktiven Begrenzungen der maximalen Verwindung des Fahrgestellrahmens oder zu einer verhältnismäßig komplizierten Ausbildung des Kupplungselements, insbesondere des fest angeordneten Teils, um bei Geländefahrt den unterschiedlichen Verwindungszuständen Rechnung tragen zu können. Letztere, relativ komplexe Lösung, kommt jedoch beispielsweise für landwirtschaftliche Kippanhänger aus Kostengründen kaum in Betracht.

Es ist nach alledem die Aufgabe der Erfindung, einen Fahrgestellrahmen gemäß den Gattungen der Ansprüche 1 bzw. 3 konstruktiv dahingehend auszugestalten, daß in einfachster Weise, insbesondere automatisch die dem jeweiligen Betriebszustand des Fahrzeugs unter dem Aspekt der Standsicherheit entsprechende Torsionssteifigkeit optimal eingestellt ist. Diese Aufgabe ist bei gattungsgemäßen Fahrgestellrahmen durch die Merkmale der Kennzeichnungsteile der Ansprüche 1 bzw. 3 gelöst.

Erfindungswesentlich ist bei der Lösung gemäß Anspruch 1, daß das Kupplungselement unmittelbar mit der Hubeinrichtung des Hängers zusammenwirkt, so daß bei jedem Anheben der Ladebrücke zwangsläufig die erforderliche Verwindungssteifigkeit des Fahrgestellrahmens eingestellt ist. Es entfallen somit jegliche, die momentane Verformung des Fahrgestellrahmens erfassende Einrichtungen, durch die ggf. ein Signal zur Betätigung des Kupplungselements gebildet wird. Vielmehr wird das Kupplungselement unmittelbar durch eine, von der Hubeinrichtung abgeleitete Steuergröße beeinflußt. Diese Steuergröße kann bei einem hydraulisch betätigten Hubzylinder, der an dem Fahrgestellrahmen schwenkbar angeordnet ist, unmittelbar durch die Schwenkbewegungen dieses Zylinders gebildet werden, welcher auf das beweglich angeordnete Bauteil des Kupplungselements einwirkt. Die Ausgestaltung des Torsionselements kann grundsätzlich beliebig sein - es kommt hier ein Hohlkörper in Betracht, der ein dem aufzunehmenden Torsionsmoment entsprechendes Widerstandsmoment aufweist, somit im einfachsten Fall ein Torsionsrohr, welches an einem Ende starr mit dem Fahrgestellrahmen verbunden ist und an seinem anderen Ende mit dem erfindungsgemäßen Kupplungselement zusammenwirkt. Dieses Torsionselement bzw. Torsionsrohr erstreckt sich entsprechend der Richtung des aufzunehmenden Torsionsmoments mittig bzw. parallel zur Längsachse des Fahrgestellrahmens.

Die erfindungsgemäßen Maßnahmen zur Gewährleistung unterschiedlicher, dem Betriebszustand des Fahrzeugs entsprechender Torsionssteifigkeiten gestalten sich konstruktiv sehr einfach und eignen sich insbesondere zur Nachrüstung bei derartigen Fahrzeugen. Das Kupplungselement ist besonders vorteilhaft dahingehend ausgestaltet, daß das bewegliche Bauteil in Abweichung von dem Stand der Technik gemäß der eingangs zitierten DE-A- 34 43 908 in einer Richtung beweglich ist, in welcher die, durch den Hubzylinder entwickelte Kraft wirksam ist. Es kann die auf das bewegliche Bauteil einwirkende Steuergröße gemäß Anspruch 3 jedoch auch eine hydraulische sein, welche unmittelbar aus dem Steuerdruck des Hubzylinders abgeleitet wird. Das Kupplungselement, insbesondere dessen bewegliches Bauteil mit dem, dieses arretierenden festen Bauteil befinden sich vorzugsweise in einer Querschnittsebene des mittig angeordneten Torsionselements und damit an einer Stelle, an der aus geometrischen Gründen mit minimalen Verwindungswegen zu rechnen ist. Dies eröffnet die Möglichkeit, die durch den Fahrgestellrahmen ansonsten maximal möglichen Verwindungswege für eine Geländefahrt optimal auszunutzen. Die Schaltbewegung kann unmittelbar von der kardanischen Anlenkung des Zylinders abgeleitet werden, wobei dessen Ruhezustand durch eine Feder eingestellt ist. Es ist diese Feder derart bemessen, daß bei jeglichem Anheben der Ladebrücke eine Auslenkung des Lagerungspunktes stattfindet und damit ein Schaltvorgang des Kupplungselements ausgelöst wird. Es werden insoweit bei der konstruktiven Realisierung des Erfindungsgegenstands weitestgehend von Bauteilen Gebrauch gemacht, die bei derartigen Fahrgestellrahmen ohnehin vorhanden sind, wobei diese eine lediglich geringfügige konstruktive Anpassung erfahren haben. Die Ableitung der Schaltbewegung des beweglichen Bauteils aus dem Steuerdruck des Hubzylinders eröffnet nahezu beliebige Freiheitsgrade bei der Anordnung des Hubzylinders relativ zu dem Kupplungselement, da der von dem Hubzylinder abgezweigte Arbeitshub in einfachster Weise übertragbar und zur Aktivierung des Kupplungselements nutzbar ist. Für den Fall, daß das bewegliche Bauteil mit einer Rückstellfeder versehen ist, ist im Rahmen der Kolben-Zylinder-Einheit die Verwendung eines einfach wirkenden Zylinders ausreichend.

Entsprechend dem Merkmal des Anspruchs 5 wird das bewegliche Bauteil des Kupplungselements durch ein Schiebeelement gebildet, welches mit dem Lagerzapfen der kardanischen Aufhängung des Hubzylinders verknüpft ist und dessen Position im Ruhezustand durch eine Feder stabilisiert ist. Das Schiebeelement besteht aus einem Kupplungsflächen tragenden Kupplungsteil und einem in einem Ringlager aufgenommenen zylindrischen Teil, wobei die Kupplungsflächen eine besondere Anpassung an die als Anlageflächen dienenden Arretierkörper aufweisen. Die Verknüpfung zwischen dem Lagerzapfen und dem Kupplungsteil erfolgt über eine Öffnung des Kupplungsteils, deren Innenwandungen entsprechend den Verschiebewegungen des Lagerzapfens vorzugsweise ballig ausgebildet sind. Es ist demzufolge das Schiebeelement in der Richtung verschiebbar, in der die Bewegung des Lagerzapfens während der Betätigung des Hubzylinders erfolgt. Die Arretierkörper können im einfachsten Fall zylindrische Körper sein, an denen, an dem Schiebeelement angebrachten Ebenen Kupplungsflächen zur Anlage bringbar sind.

An dem Torsionselement, und zwar mit Abstand voneinander sind der oder die Arretierkörper einerseits und ein Zapfen andererseits, und zwar in einer gemeinsamen Querschnittsebene befestigt, wobei der Zapfen in einer Bohrung des Fahrgestellrahmens, insbesondere einem Querträger desselben aufgenommen ist. Das Schiebeelement seinerseits ist über sein zylindrisches Teil in einer an dem Fahrgestellrahmen befestigten Ringbohrung und gemäß den Merkmalen der Ansprüche 7 und 8 mittels des Lagerzapfens in einem Langloch des Fahrgestellrahmens geführt, wobei die Richtung der Verschiebbarkeit des Schiebeelements durch die Verlängerung der Längsachse des Langlochs auf welche der Mittelpunkt des genannten Zapfens liegt, festgelegt ist. Im nicht eingerückten Zustand des Schiebeelements kann somit das Torsionselement um die Achse des Zapfens gedreht werden, während im eingerückten Zustand des Schiebeelements ein Torsionsmoment übertragbar ist, und zwar mittels eines durch den Abstand des Zapfens und der Arretierkörper festlegbaren Kräftepaares. Die Kraftübertragung auf dem Fahrgestellrahmen erfolgt somit einerseits über die Bohrung, in welcher der Zapfen anliegt und andererseits über die Längsseiten des erwähnten Langloches, welches von dem Lagerzapfen des Hubzylinders durchdrungen wird. Sowohl die erwähnte Bohrung als auch das Langloch können in einem Querträger des Fahrgestells angeordnet sein.

In manchen Fällen kann es zweckmäßig sein, das Kupplungsteil in Verbindung mit den Arretierkörpern so auszugestalten und anzuordnen, daß die freie Drehung des Torsionselements gegenüber dem Fahrgestellwinkel begrenzt ist, da hierdurch ein Einrücken des Schiebeelements in die Verriegelungsposition bzw. der Gestaltung der Arretierkörper in Verbindung mit den Kupplungsflächen vereinfacht wird.

Der Erfindungsgegenstand ist vorstehend anhand eines formschlüssig wirkenden Kupplungselements erläutert worden.

Gemäß den Merkmalen des Anspruchs 9 ist das erfindungsgemäße Prinzip jedoch auch bei reibschlüssig wirkenden Kuplungselementen anwendbar. Der Hubzylinder bzw. ein dessen kardanische Aufhängung zugeordneter Lagerzapfen wirkt hierbei auf einen Mechanismus ein, durch welchen die geradlinige Verschiebung des Lagerzapfens in die Bewegung zumindest eines, mit einem Reibbelag beschichteten Reibbelagträgers in Richtung auf eine entsprechende Gegenfläche hin umgesetzt wird. Es wird somit auch in diesem Fall der Kupplungsvorgang, durch welchen das Torsionselement starr mit dem Fahrgestellrahmen verbunden wird zwangsläufig dann ausgelöst, wenn der Hubzylinder beaufschlagt wird, d.h. die Ladebrücke angehoben wird. Im wesentlichen in einer Querschnittsebene des Torsionselements werden die zur Ankupplung desselben erforderlichen Reibungskräfte aufgenommen und das diesen zugeordnete Kräftepaar auf das Fahrgestell, insbesondere einen Querträger desselben übertragen.

Die Merkmale des Anspruchs 10 bringen eine besonders einfache Ausgestaltung des als Gelenkviereck ausgebildeten Mechanismus mit sich, wobei an zwei, einander diametral gegenüberliegenden Gelenkpunkten die Reibbelagträger befestigt sind und wobei ein dritter Gelenkpunkt durch einen, an dem Fahrgestellrahmen angebrachten, beispielsweise angeschweißten Lagerbolzen und der restliche Gelenkpunkt durch den, der kardanischen Aufhängung des Hubzylinders zugeordneten, in einem Langloch des Fahrgestellrahmens geführten Lagerzapfen gebildet wird. Diese Gelenkpunkte stehen über entsprechende Hebelarme miteinander in Verbindung. Man erkennt, daß das Gelenkviereck ausschließlich an dem Fahrgestellrahmen geführt ist und daß - von den Reibbelägen der Reibbelagträger abgesehen - keine Berührung mit dem Torsionselement besteht.

Entsprechend den Merkmalen des Anspruchs 11 kann das Torsionselement in Verbindung mit dem reibschlüssigen Kupplungselement so ausgestaltet sein, daß eine freie Drehung des Torsionselements gegenüber dem Fahrgestellrahmen begrenzt ist. Diese Winkelbegrenzung kann bei einem rohrartigen Torsionselement besonders einfach dadurch erreicht werden, daß das Gelenkviereck weitestgehend innerhalb des Torsionsrohres angeordnet ist, so daß die Innenmantelflächen desselben als Gegenwirkflächen für die Reibbelagträger fungieren, wobei der Umfang des Torsionsrohres jedoch mit Ausschnitten versehen ist, in welche zumindest ein Gelenkpunkt des Gelenkvierecks hineinragt, so daß durch die Winkelbemessung dieses Ausschnitts die Winkelbegrenzung der Drehung des Torsionsrohres in einfachster Weise konstruktiv festlegbar ist.

Die Ausgestaltung des Schiebeelements entsprechend den Merkmalen der Ansprüche 13 bis 16 bringt neben einer stabilen Führung auch die Möglichkeit einer Verstärkung der auf das Schiebeelement wirkenden Rückstellkraft mit sich. Die mit Abstand voneinander angeordneten Federn ermöglichen ferner eine Anordnung des Drehpunkts des/der Torsionsrohrs/Torsionsrohre in den durch die Federn seitlich umgrenzten Raum. Es kann somit die Lage des Drehpunkts ohne räumliche Behinderung durch die Federn gewählt werden. Schließlich besteht die Möglichkeit, sämtliche Teile des Kupplungselements innerhalb des durch das U-Profil des Querträgers umgrenzten Raumes unterzubringen, wobei diese Teile vor mechanischen, auf äußere Einwirkungen zurückführbaren Beschädigungen geschützt angeordnet sind.

Die Merkmale der Ansprüche 17 bis 22 dienen der Erweiterung des Funktionsbereichs des Torsionsrohres, indem dieses zumindest teilweise auf die Funktion eines Biegeträgers bezüglich Querkraftbiegung und ebene Biegung übernimmt. Es können somit die ohnehin vorhandenen Längsträger schwächer dimensioniert werden, wobei im Fall der ebenen Biegung auf Maßnahmen der Knotenpunktversteifung wie Knotenbleche, Zugbänder usw. weitestgehend verzichtet werden kann, womit ein Beitrag zur Konstruktionsvereinfachung geleistet ist.

Bevorzugtes Anwendungsgebiet der Erfindung sind Kippanhänger, insbesondere solche, die in der Landwirtschaft eingesetzt sind.

Die Erfindung wird im folgenden unter Bezugnahme auf die in den Zeichnungen dargestellten Ausführungsbeispiele näher erläutert werden. Es zeigen:

Fig. 1 eine perspektivische Ansicht eines erfindungsgemäßen Fahrgestellrahmens;

Fig. 2 eine Schnittdarstellung eines erfindungsgemäßen Kupplungselements;

Fig. 3 eine Schnittdarstellung des Kupplungselements gemäß Fig. 2 in einer Ebene III-III;

Fig. 4 eine Schnittdarstellung eines anderen Ausführungsbeispiels eines erfindungsgemäßen Kupplungselements;

Fig. 5 eine Schnittdarstellung des Kupplungselements gemäß Fig. 4 in einer Ebene V-V;

Fig. 6 ein weiteres Ausführungsbeispiel eines erfindungsgemäßen Kupplungselements;

Fig. 7 eine Schnittdarstellung des Kupplungselements gemäß Fig. 6 in einer Ebene VII-VII;

Fig. 8 eine andere Ausgestaltung eines Kupplungselements entsprechend einer Ansicht in einer Ebene VIII-VIII der Fig. 2;

Fig. 9 eine Ansicht eines weiteren Ausführungsbeispiels eines Kupplungselements in einer teilweisen Schnittdarstellung entsprechend der Ebene IX-IX der Fig. 10;

Fig. 10 eine teilweise Schnittdarstellung des Kupplungselements der Fig. 9 in Ebenen X-X;

Fig. 11 ein weiteres Ausführungsbeispiel eines Kupplungselements in einer Darstellung ähnlich der Fig. 9;

Fig. 12 eine Draufsicht auf ein Ausführungsbeispiel eines erfindungsgemäßen Fahrgestellrahmens;

Fig. 13 eine vergrößerte Darstellung des Bereichs XIII der Fig. 12 in einem teilweisen Vertikalschnitt mit abgewandelter Form der Betätigung der Kupplungselemente;

Fig. 14 eine Draufsicht auf ein weiteres Ausführungsbeispiel eines erfindungsgemäßen Fahrgestellrahmens;

Fig. 15 eine Ansicht des Fahrgestellrahmens der Fig. 14 in einer Ebene XV-XV;

Fig. 16 eine abgewandelte Ausführungsform der Verknüpfung zweier Torsionsrohre in einer Darstellung ähnlich der Fig. 13.

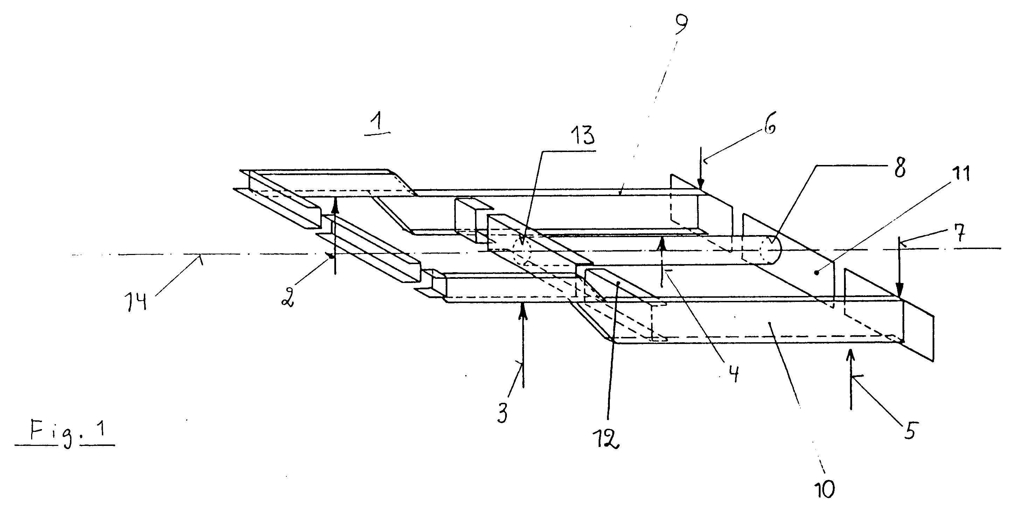

Mit 1 ist in Fig. 1 ein Fahrgestellrahmen für einen landwirtschaftlichen Hänger in seiner Gesamtheit bezeichnet, wobei mit den Bezugsziffern 2,3 die Stellen bezeichnet sind, an denen der Rahmen unter Zwischenanordnung eines zeichnerisch nicht dargestellten, eine Zugdeichsel tragenden Drehgestells sowie entsprechender Federungen auf der Vorderachse aufgelagert ist, wohingegen mit 4,5 die entsprechenden, der Auflagerung der Hinterachse dienenden Stellen bezeichnet sind. Der Fahrgestellrahmen 1 ist auf offenen U-Profilteilen zusammengeschweißt und in seinem vorderen Abschnitt gekröpft ausgebildet. Mit 6,7 sind die, über die Auflagerpunkte der Hinterachse hinausragenden Stellen bezeichnet, an denen die der zeichnerisch nicht dargestellten Ladebrücke zugeordnete Kippachse aufgelagert ist.

Mit 8 ist ein sich mittig in Längsrichtung des Fahrgestellrahmens 1 erstreckendes Torsionsrohr bezeichnet, welches mit einem, die beiden Längsträger 9,10 verbindenden hinteren Querträger 11 verschweißt bzw. in sonstiger Weise starr verbunden ist.

Mit 12 ist ein weiterer, als U-Profil ausgebildeter Querträger bezeichnet, der in Längsrichtung mit Abstand von dem hinteren Querträger 11 angeordnet ist und seinerseits mit den Längsträgern 9,10 starr verbunden, insbesondere verschweißt ist.

Mit 13 ist eine Stelle bezeichnet, an welcher in noch zu erläuternder Weise eine starre Anbindung des Torsionsrohres 8 an den Querträger 12 in Abhängigkeit von ebenfalls noch zu erläuternden Belastungsbedingungen gegeben ist.

Man erkennt, daß ohne die starre Anbindung des Torsionsrohres 8 an der Stelle 13 an den Querträger 12 der Fahrgestellrahmen 1 hinsichtlich seiner Längsachse 14 als verhältnismäßig torsionsweich angesehen werden muß, wohingegen durch starre Anbindung des Torsionsrohres 8 und der Stelle 13 die Steifigkeit des Fahrgestellrahmens 1 erheblich vergrößert wird. Erfindungsgemäß ist an der Stelle 13 ein im folgenden zu beschreibendes Kupplungselement vorgesehen, durch welches bei einem Anheben der Ladebrücke zwecks Durchführung eines Kippvorgangs automatisch eine starre Anbindung des Torsionsrohres 8 an den Querträger 12 stattfindet. Es wird somit bei jedem Kippvorgang zwangsläufig die für die Standsicherheit des Hängers erforderliche Verwindungssteifigkeit des Fahrgestellrahmens sichergestellt, wohingegen im Fahrzustand, d.h. bei abgesenkter Ladebrücke die für eine Geländefahrt erforderliche Torsionsfähigkeit des Fahrgestellrahmens ebenfalls erreicht ist.

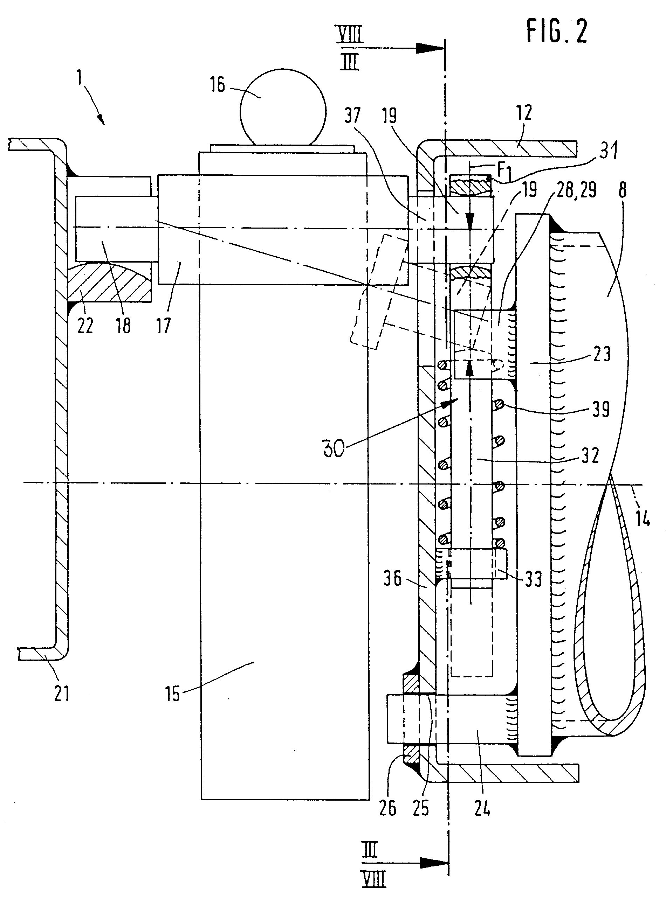

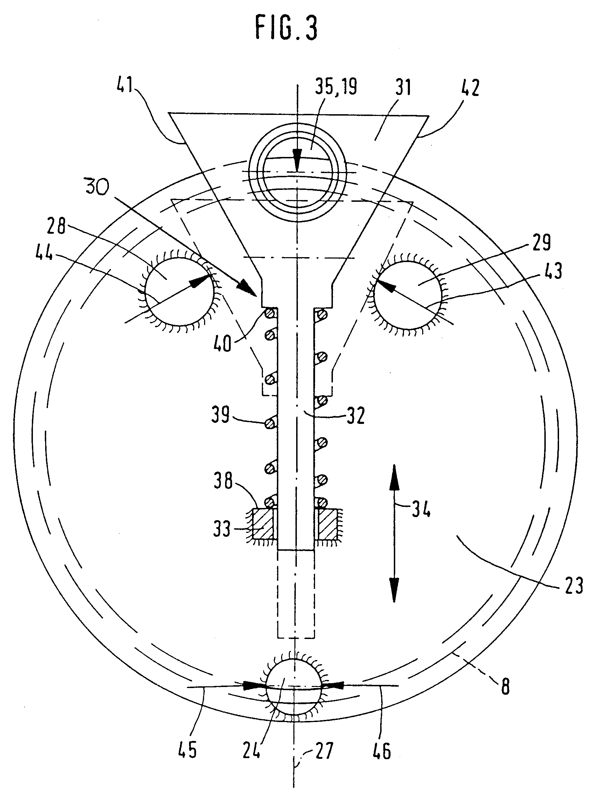

In den Fig. 2 und 3 ist ein erstes Ausführungsbeispiel des erfindungsgemäßen, selbsttätig wirksam werdenden Kupplungselements gezeigt. Hierbei ist mit 15 ein mittig unter der Ladebrücke angeordneter, dem Kippen dienender, hydraulisch betätigter Hubzylinder bezeichnet, dessen Kolbenstange in einem, an der Unterseite der Ladebrücke angebrachten Kugelgelenk aufgenommen ist, dessen Kugelteil 16 in der Zeichnung wiedergegeben ist. Der Hubzylinder 15 ist in einem Ring 17 aufgenommen, der gegenüber dem Fahrgestellrahmen 1 nach Art eines Kardangelenks aufgehängt ist. In Fig. 2 sind zwei, an dem Ring 17 angebrachte Lagerzapfen 18,19 erkennbar, deren Achsen ungefähr parallel zur Längsachse des Fahrgestellrahmens verlaufen.

Mit 21 ist ein Querträger des Fahrgestellrahmens bezeichnet, an dem eine Lagerschale 22 angeschweißt ist, in welcher der Lagerzapfen 18 des Ringes 17 aufgenommen ist. Auf die Lagerung des Lagerzapfens 19 wird im folgenden noch näher eingegangen werden.

Das Torsionsrohr 8 ist an seinem dem Querträger 12 zugekehrten Endbereich durch eine angeschweißte Deckplatte 23 verschlossen, deren äußerer, unterer Bereich einen Zapfen 24 trägt. Dieser, an der Deckplatte 23 angeschweißte Zapfen 24 ist durch eine Bohrung 25 des Querträgers 12 hindurchgeführt und drehbar in dieser gelagert. Auf der der Deckplatte 23 abgekehrten Seite des Querträgers 12 ist ein mit einer, der Bohrung 25 entsprechenden Bohrung versehenes Lagerstück 26 angeschweißt, dessen Bohrung ebenfalls von dem Zapfen 24 durchdrungen wird. Die Bohrung 25 in Verbindung mit dem Lagerstück 26 und dessen Bohrung bilden somit ein Gleitlager für den Zapfen 24.

Im oberen Bereich der Deckplatte 23, nämlich mit Abstand von dem Zapfen 24 und symmetrisch beiderseits der vertikalen Symmetrieachse 27 der kreisförmigen Deckplatte 23 befinden sich zwei kreiszylinderförmige Arretierkörper 28,29,die an der Deckplatte 23 angeschweißt sind.

Mit 30 ist ein Schiebeelement bezeichnet, welches aus einem oberen, im wesentlichen dreieckförmigen Kupplungsteil 31 und einem unteren, im wesentlichen zylindrischen Teil 32 besteht.

An dem Querträger 12, und zwar auf der, der Deckplatte 23 zugekehrten Seite ist ein Ringlager 33 angeschweißt, dessen Achse parallel zur Symmetrieachse 27 der Deckplatte 23 verläuft. Das Ringlager 33 ist zur Aufnahme des zylindrischen Teils 32 bestimmt, welch letzteres in Richtung der Pfeile 34 in dem Ringlager 33 verschiebbar gelagert ist. Das Kupplungsteil 31 ist mit einer Bohrung 35 versehen, die senkrecht zur Zeichenebene der Fig. 3 verläuft und deren Achse die Symmetrieachse 27 der Zeichnungsfigur 3 schneidet. In der Bohrung 35 ist der Lagerzapfen 19 des Ringes 17 aufgenommen. Der Zapfen 19 durchdringt dabei ein in dem vertikalen Steg 36 des Querträgers 12 angeordnetes Langloch 37.

Zwischen der Kreisringfläche 38 des Ringlagers 33 und einer dieser Kreisringfläche 38 zugekehrten Kreisringfläche 40 des Kupplungsteils 31 ist - das zylindrische Teil 32 umgebend - eine Feder 39 eingespannt.

Das Kupplungsteil 31 ist in Verbindung mit der Lage und Anordnung der Arretierkörper 28,29 derart ausgestaltet, daß im Fahrzustand des Hängers, bei welchem die Ladebrücke sich in einer waagerechten Position befindet, das Kupplungsteil 31 sich in seiner oberen Schaltstellung befindet, in welcher dessen unter Winkeln zur Symmetrieachse 27 verlaufende Kupplungsflächen 41,42 mit Abstand von den Arretierkörpern 28,29 angeordnet sind. In dieser Stellung des Kupplungsteils 31 ist somit das Torsionsrohr 8 gegenüber dem Querträger 2 um die Achse des Zapfens 24 schwenkbar gelagert und ist somit für die Torsionssteifigkeit des Fahrzeugrahmens zumindest in dem Maße bedeutungslos, in dem die Kupplungsflächen 41,42 bei einer Verwindung des Fahrzeugrahmens nicht zur Anlage an den Arretierkörpern 28, 29 gelangen. Es ist somit das Ausmaß einer im Fahrzustand zugelassenen Verwindung durch den Abstand der Kupplungsflächen 41,42 von den Arretierkörpern 28,29 bestimmt. Dieser Abstand ist demzufolge derart bemessen, daß die bei einer Geländefahrt zu erwartenden Verwindungen des Fahrzeugrahmens durch diese zugelassenen Verformungsstrecken problemlos aufnehmbar sind.

Die Lagerflächen der Lagerschale 22 einerseits und diejenigen der Bohrung 35 sind ballig ausgebildet, um während einer Schwenkung des Ringes 17 um eine senkrecht zur Zeichenebene der Fig. 2 verlaufende Achse Verkantungen auszuschließen wie unzulässig hohe Kantenpressungen.

Das Torsionsrohr 8 in Verbindung mit der Deckplatte 23 sowie den Querträger 12 sind derart bemessen, daß das Schiebeelement 30, die Feder 39, das Ringlager 33 sowie die Arretierkörper 28,29 innerhalb des durch das U-Profil umgrenzten Raumes des Querträgers 12 angeordnet sind. Hierdurch ist ein gewisser mechanischer Schutz dieser Funktionselemente gegeben.

Die in den Fig. 2 und 3 ausgezogen wiedergegebene Position des Kupplungsteils 31 entspricht dem Fahrzustand des Hängers, bei welchem die Ladebrücke nicht angekippt ist. In diesem Zustand wird somit der Ring 17 unter Mitwirkung der Feder 39 in der gezeigten Position gehalten. Über das Kugelteil 16 werden in diesem Schaltzustand vorzugsweise keinerlei Kräfte übertragen.

Sobald jedoch die Ladebrücke durch entsprechende Druckbeaufschlagung des Hubzylinders 15 um die, durch die Stellen 6,7 (Fig. 1) verlaufende Kippachse gekippt wird, wird notwendigerweise der Hubzylinder 15 um eine senkrecht zur Zeichenebene der Fig. 2 verlaufende Achse geschwenkt, wodurch der Lagerzapfen 19 in die in Fig. 2 gestrichelt wiedergegebene Stellung entgegen der Rückstellkraft der Feder 39 geschwenkt wird. Aufgrund der hiermit verbundenen Bewegung des Schiebeelements 30 in die in Fig. 3 gestrichelt wiedergegebene Position gelangen die Kupplungsflächen 41,42 - wie durch die Pfeile 43,44 angedeutet - zur Anlage an den Arretierkörpern 28,29, wodurch eine weitere Bewegung des Schiebelements 30 verhindert wird. In dieser gestrichelt wiedergegebenen Schaltstellung des Schiebeelements 30 ist somit das Torsionsrohr 8 verdrehstarr mit dem Querträger 12 verbunden, wodurch der Fahrgestellrahmen 1 die für den Kippvorgang erwünschte Verwindungssteifigkeit erhält. Die Momentenübertragung von der Deckplatte 23 auf den Querträger 12 erfolgt somit über ein Kräftepaar, welches durch den vertikalen Abstand der durch die Pfeile 43,44 symbolisierten Kraftangriffspunkte im Bereich der Kupplungsflächen 41,42 einerseits und den durch die Pfeile 45,46 symbolisierten Kraftangriffspunkte im Bereich des Zapfens 24 andererseits bestimmt ist. Die Kraftübertragung auf den Querträger 12 findet somit einmal im Bereich der Bohrung 25 und andererseits im Bereich des Langloches 37 statt.

Man erkennt, daß somit durch Auslösung des Kippvorgangs die für dessen sichere Durchführung erforderliche Verwindungssteifigkeit des Fahrgestellrahmens 1 sich automatisch einstellt, wobei als auslösende Steuergröße die im wesentlichen vertikal gerichtete Belastung des Hubzylinders 15 während der Durchführung des Kippvorgangs herangezogen wird.

In den folgenden Figuren sind Funktionselemente, die mit denjenigen der Fig. 1 bis 3 übereinstimmen, auch übereinstimmend beziffert, so daß auf eine diesbezügliche wiederholte Beschreibung verzichtet werden kann.

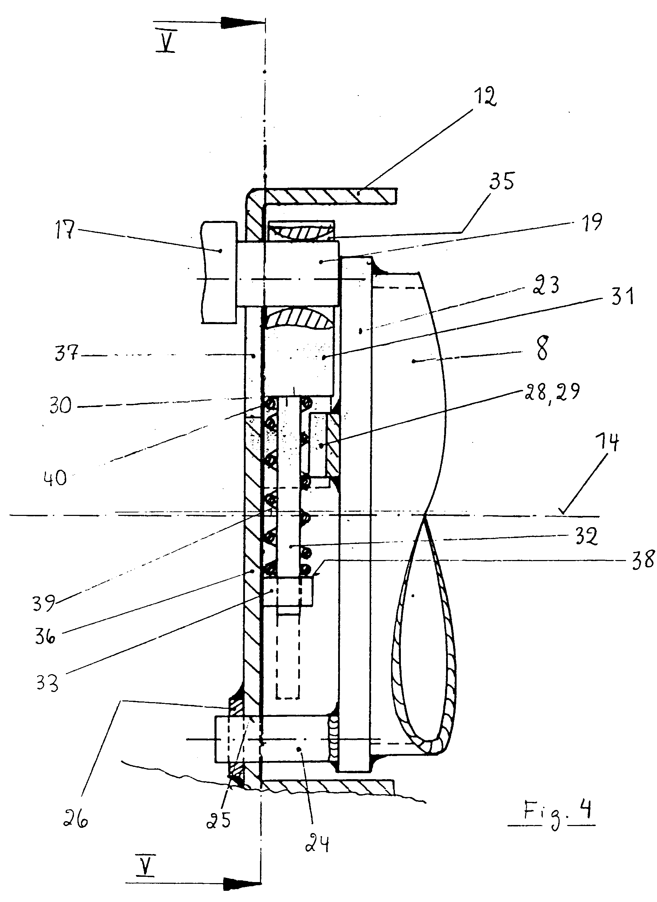

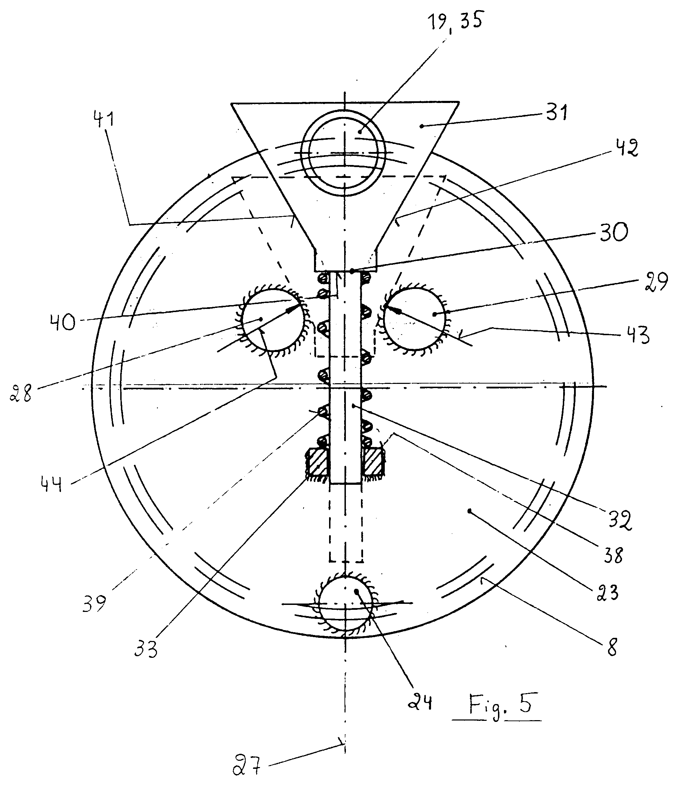

Das in den Fig. 4 und 5 dargestellte Ausführungsbeispiel unterscheidet sich von dem vorstehend beschriebenen Ausführungsbeispiel im wesentlichen durch die Ausgestaltung des Schiebeelements 30. Dessen untere, als Anlagefläche für die Feder 39 dienende Kreisringfläche 40 befindet sich im Fahrzustand des Fahrgestellrahmens mit Abstand oberhalb der Arretierkörper 28,29, wobei gleichzeitig der zylindrische Teil 32 - in der Zeichenebene der Fig. 4 gesehen - einschließlich der diesen umgebenden Feder 39 mit Abstand von den Arretierkörpern 28,29, angeordnet ist, so daß im Fahrzustand Schwenkbewegungen des Torsionsrohres 8 um die Achse des Zapfens 24 möglich sind, ohne daß für diese Schwenkbewegungen solche Winkelbegrenzungen bestehen, die durch das Kupplungsteil 31 gegeben sind.

Das Kupplungsteil 31 ist in seiner Dicke - senkrecht zur Zeichenebene der Fig. 5 - in Verbindung mit den in dieser Richtung verlaufenden Abmessungen der Arretierkörper 28,29 derart bemessen, daß durch eine Vertikalbewegung in Richtung der Pfeile 34 die Kupplungsflächen 41,42 zur Anlage an den Arretierkörpern 28,29 bringbar sind, welches in Fig. 5 durch die gestrichelt wiedergegebene Schaltposition des Kupplungsteils 31 angedeutet ist. Die Wirkungsweise dieses Ausführungsbeispiels entsprechend den Fig. 4 und 5 entspricht im übrigen demjenigem gemäß den Fig. 2 und 3, d.h. bei Belastung eines hier nicht mehr gezeigten Hubzylinders findet eine Absenkung des Ringes 17 und damit des Lagerzapfens 19 statt, wodurch eine entsprechende Absenkung des Kupplungsteils 31 in die in Fig. 5 gestrichelt wiedergegebene Position erzielt wird. In dieser Position findet eine starre Ankopplung des Torsionsrohres 8 an dem Querträger 12 statt, wodurch die für einen Kippvorgang erforderliche Verwindungssteifigkeit des Fahrzeugrahmens eingestellt ist und wobei diese Einstellung selbsttätig mit der Auslösung des Kippvorgangs erfolgt.

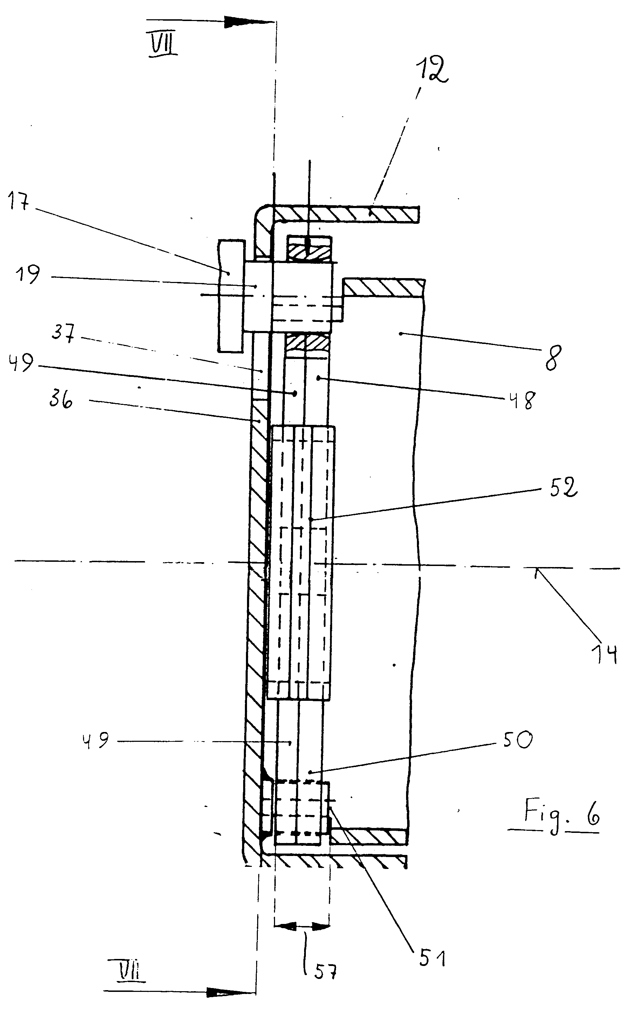

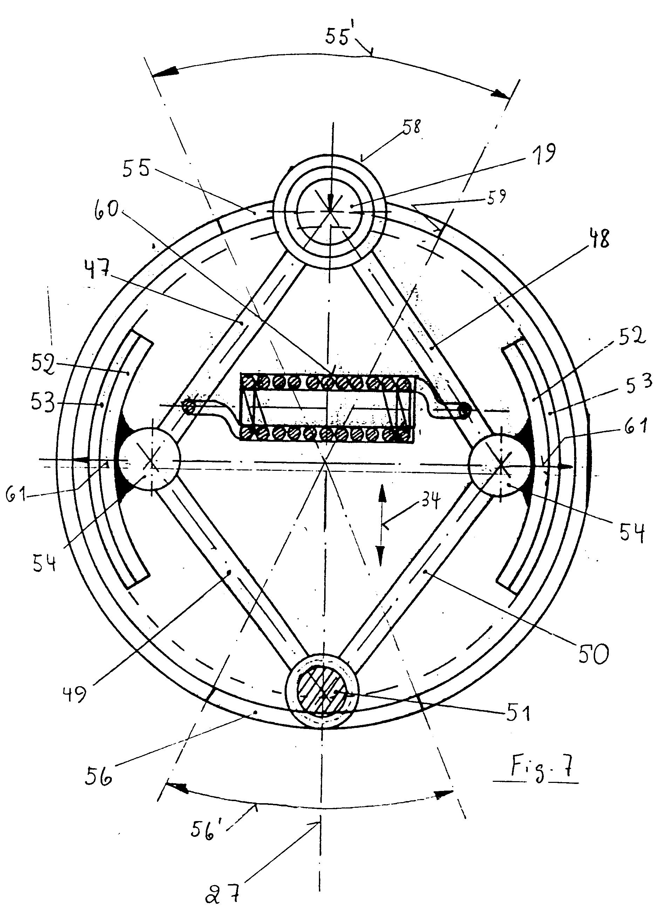

Die Erfindung wurde in den vorangegangenen Beispielen anhand einer formschlüssigen Ankopplung des Torsionsrohres 8 an den Querträger 12 erläutert. Im folgenden soll unter Bezugnahme auf die Fig. 6 und 7 ein Ausführungsbeispiel einer reibschlüssigen Ankopplung des Torsionsrohres 8 an den Querträger 12 beschrieben werden.

Der Zapfen 19 ist bei diesem Ausführungsbeispiel an der Spitze eines Gelenkvierecks gelagert, welches durch die Hebelarme 47,48,49 und 50 gebildet wird. Sämtliche Hebelarme 47 bis 50 weisen an ihren Enden kreisringförmige Lagerflächen auf, die an jedem Gelenkpunkt von einem gemeinsamen Lagerbolzen durchdrungen werden. Der Lagerzapfen 19 bildet hierbei einen dieser Lagerbolzen, wohingegen der diesem diagonal gegenüberliegende Gelenkpunkt durch einen an dem Querträger 12 angeschweißten Lagerbolzen 51 gebildet wird. Der Lagerbolzen 51 befindet sich hierbei ebenso wie der Lagerzapfen 19 auf der Symmetrieachse 27 (Fig. 7). Die beiden symmetrisch beiderseits der Symmetrieachse 27 angeordneten Gelenkpunkte tragen kreisbogenförmige Reibbelagträger 52 mit Reibbelägen 53, wobei an ersteren besondere Lagergehäuse 54 angeschweißt sind, welche zur Aufnahme der diesen Gelenkpunkten zugeordneten, zeichnerisch nicht dargestellten Lagerbolzen dienen, auf welchen wiederum die genannten Hebelarme gelagert sind. Das Torsionsrohr 8 ist an seinem, dem Querträger 12 zugekehrten Ende offen ausgebildet und umfangsseitig mit Ausschnitten 55, 56 versehen, die sich jeweils über Umfangswinkel 55′, 56′ des Kreisumfangs des Torsionsrohres 8 erstrecken. Die genannten Ausschnitte 55,56 sind jeweils den beiden, auf der Symmetrieachse 27 befindlichen Gelenkpunkten des genannten Gelenkvierecks zugeordnet und erstrecken sich symmetrisch beiderseits dieser Achse. Die axiale Tiefe 57 der genannten Ausschnitt 55,56 ist - ausgehend von dem stirnseitigen Ende des Torsionsrohres 8 derart bemessen, daß entsprechend der axialen Erstreckung der aneinander liegenden Hebelarmpaare 48,47 sowie 49,50 diese im Bereich der Ausschnitte 55,56 in das Torsionsrohr 8 hineinragen. Es können dem zufolge die Reibbeläge 53 durch Verschiebung des genannten Gelenkvierecks zur Anlage an die Innenfläche des Torsionsrohres 8 gebracht werden.

Man erkennt anhand der vorangegangenen Darstellung, daß gegenüber dem Querträger 12 der dem Lagerbolzen 51 zugeordnete Gelenkpunkt fest liegt, während der letzterem diagonal gegenüberliegende, durch den Lagerzapfen 19 gebildete Gelenkpunkt entsprechend dem Langloch 37 vertikal in Richtung der Pfeile 34 bewegbar ist. Entsprechend dieser Vertikalbewegung in Richtung der Pfeile 34 werden demzufolge die Reibbeläge 53, deren kreisbogenförmige Kontur derjenigen des Torsionsrohres 8 angepaßt ist, gegen die Innenfläche des Letzteren bewegt bzw. von dieser entfernt.

Man erkennt gleichzeitig, daß die freie Bewegbarkeit des Torsionsrohres durch die Winkelerstreckung der Ausschnitte 55,56 begrenzt ist, und spätestens dann ihr Ende findet, wenn die Außenfläche der dem Lagerzapfen 19 zugeordneten Lagerringe 58 an die Begrenzungsflächen 59 des ebenso wie der Ausschnitt 56 die axiale Tiefe 57 aufweisenden Ausschnitts 55 anstoßen.

Mit 60 ist eine Zugfeder bezeichnet, durch welche das Gelenkviereck im unbelasteten Zustand des Lagerzapfens 19 in einem Schaltzustand gehalten wird, in welchem keine Ankopplung des Torsionsrohres 8 an den Querträger 12 stattfindet. Die Feder 60 ist zu diesem Zweck zwischen den Hebelarmen 47,48 angeordnet.

Die Wirkungsweise des in den Fig. 6 und 7 wiedergegebenen Ausführungsbeispiels ist ähnlich derjenigen der vorstehend bereits beschriebenen. Sobald über den Lagerzapfen 19 eine abwärts gerichtete Bewegung in das Gelenkviereck eingeleitet wird, werden die den Lagergehäusen 54 zugeordneten Gelenkpunkte in Richtung der Pfeile 61 radial verschoben, so daß es zu einem Reibschluß zwischen der Innenwandung des Torsionsrohres 8 und der Reibbelägen 53 der Reibbelagträger 52 kommt. Das von dem Torsionsrohr aufzunehmende Moment wird somit über die Reibbeläge 53, das genannte Gelenkviereck, den Lagerbolzen 51 sowie den Lagerzapfen 19 auf den Querträger 12 übertragen, so daß in diesem Schaltzustand das Torsionsrohr 8 starr mit dem Querträger 12 in Verbindung steht. Sobald eine Entlastung des Lagerzapfens 19 stattfindet, d.h. bei Beendigung des Kippvorgangs wird der genannte Reibschluß durch die Rückstellkraft der Feder 60 gelöst. Man erkennt, daß sich auch bei dieser Ausführungsform die für den Kippvorgang erforderliche Rahmensteifigkeit ebenso automatisch einstellt, wie die nach Beendigung des Kippvorgangs für eine Geländefahrt erwünschte geringe Verwindungssteifigkeit.

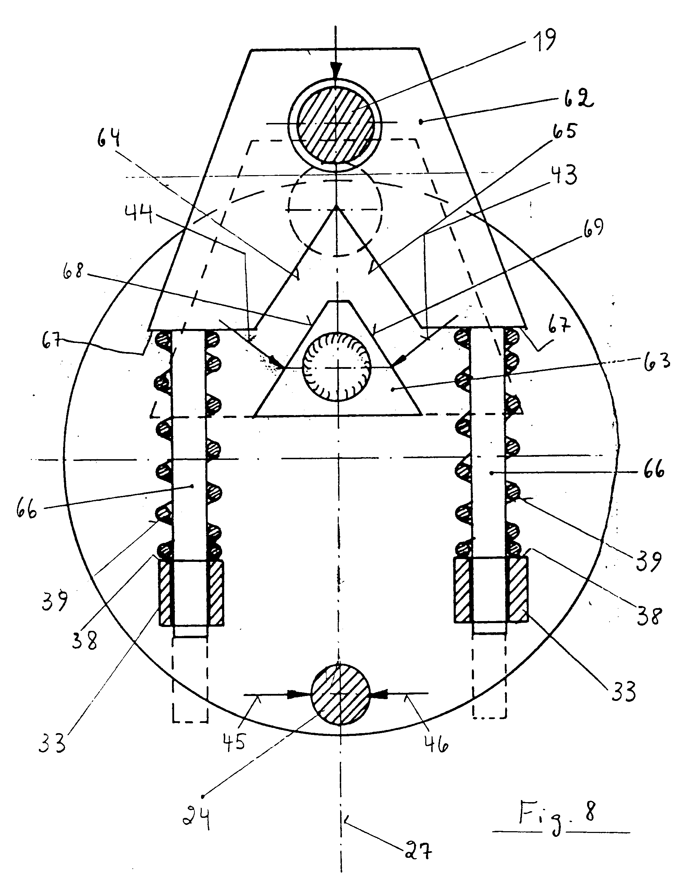

Das in Fig. 8 gezeigte Ausführungsbeispiel entspricht im wesentlichen demjenigen gemäß den Fig. 2 und 3 und unterscheidet sich von letzterem im wesentlichen nur durch die andersartige Gestaltung eines Schiebeelements 62 sowie des mit diesem zusammenwirkenden Arretierkörpers 63. Das Schiebeelement 62 ist - in der Zeichnungsebene der Fig. 8 gesehen - von V-förmiger Gestalt, dessen - unter einem Winkel zur Symmetrieebene 27 verlaufende Innenflächen Kupplungsflächen 64,65 bilden. Beide Schenkel des V sind mit zylindrischen sich zueinander und zu der Symmetrieachse 27 parallel und symmetrisch beiderseits letzterer erstreckenden zylindrischen Teilen 66 versehen, welche in jeweils einem Ringlager 33 aufgenommen sind. Zwischen Anschlagflächen 67 an den Endbereichen der Schenkel des V-förmigen Schiebeelements 62 einerseits und den Kreisringflächen 38 der Ringlager 33 andererseits - die zylindrischen Teile 66 umgebend sind wiederum Federn 39 angeordnet, deren Wirkungsweise mit derjenigen gemäß den in den Fig. 2 und 3 beschriebenen Ausführungsbeispiel identisch ist.

Der Arretierkörper 63 ist - in der Zeichenebene der Fig. 8 gesehen - im wesentlichen dreieckförmig ausgebildet und weist insbesondere zwei, sich parallel zu den Kupplungsflächen 64,65 erstreckende Anlageflächen 68,69 auf. Der Arretierkörper 63 ist derart angeordnet, daß im unbelasteten Zustand des Lagerzapfens 19 sich die Kupplungsflächen 64,65 mit Abstand zu den Anlageflächen 68, 69 erstrecken, so daß entsprechend diesem Abstand bei unbelastetem Zustand des Lagerzapfens 19 das Torsionsrohr 8 um die Achse des Zapfens 24 frei schwenkbar ist. Die Begrenzung des Schwenkwinkels ergibt sich in dem gezeigten Ausführungsbeispiel daraus, daß in dem genannten unbelasteten Zustand der Arretierkörper 63 räumlich in die durch die Aussparung des V-förmigen, die Kupplungsflächen 64,65 beinhaltenden Raumes hineinragt.

Das in Fig. 8 dargestellte Ausführungsbeispiel entspricht in seiner Wirkungsweise im übrigen den bereits vorangegangenen, so daß sich eine diesbezügliche wiederholte Beschreibung erübrigt.

Im Bedarfsfall kann zwischen den Schiebeelementen 30,62 einerseits und dem Ring 17 andererseits ein Kraftverstärkungselement angeordnet sein, beispielsweise ein Hebelsystem. Hierdurch wird die Zuverlässigkeit des Kupplungsvorgangs weiter verbessert.

Es kann das in den Fig. 6 und 7 gezeigte Ausführungsbeispiel auch derart ausgestaltet sein, daß sich das Gelenkviereck völlig innerhalb des Torsionsrohres 8 befindet. Dies hat den Vorteil, daß eine Versteifung des Fahrgestellrahmens auch bei nahezu beliebigen Verformungszuständen möglich ist.

Das in den Fig. 4 und 5 gezeigte Ausführungsbeispiel ist in denjenigen Fällen zweckmäßig, in denen die zu erwartenden Verwindungen quantitativ derart begrenzt sind, daß ein Einrücken des Schiebeelements 30 in die Verriegelungsposition noch möglich ist oder in denen im verformten Zustand des Fahrgestellrahmens kein Kippvorgang auszulösen ist.

Schließlich kann das Schiebeelement in Verbindung mit den Arretierkörpern 28, 29, 63 auch derart ausgestaltet sein, daß - ggf. in Verbindung mit einem Kraftverstärkungselement - das Schiebeelement auch im verformten Zustand des Fahrgestellrahmens zumindest in eine erste, eine Versteifung bewirkende Stellung einrückbar und bei Rückverformung des Fahrgestellrahmens in den unverformten Zustand in seine endgültige, die Versteifung bewirkende Stellung überführbar ist. Gegebenenfalls kann auf diesem Wege auch die Verformung des Fahrgestellrahmens beeinflußt werden.

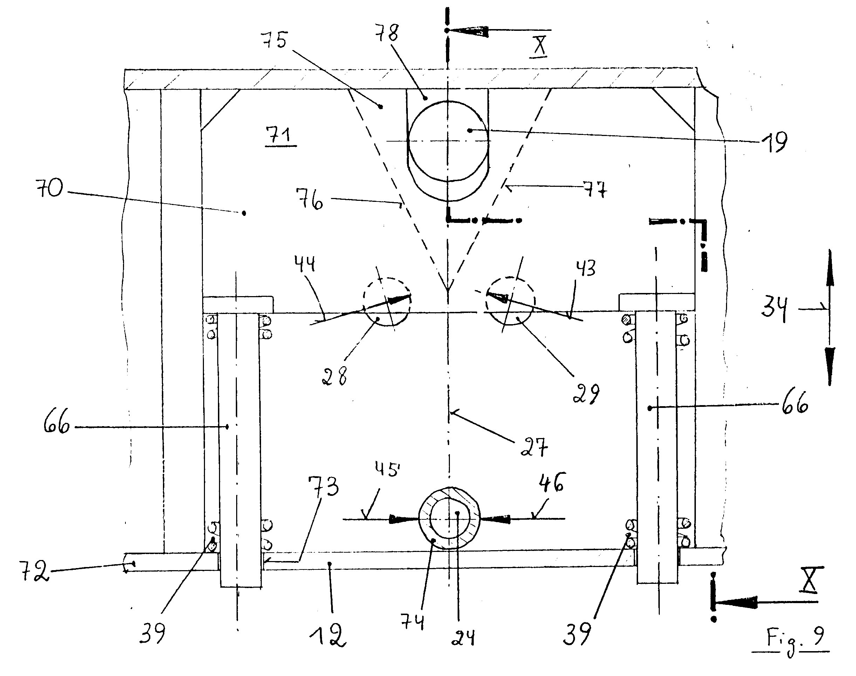

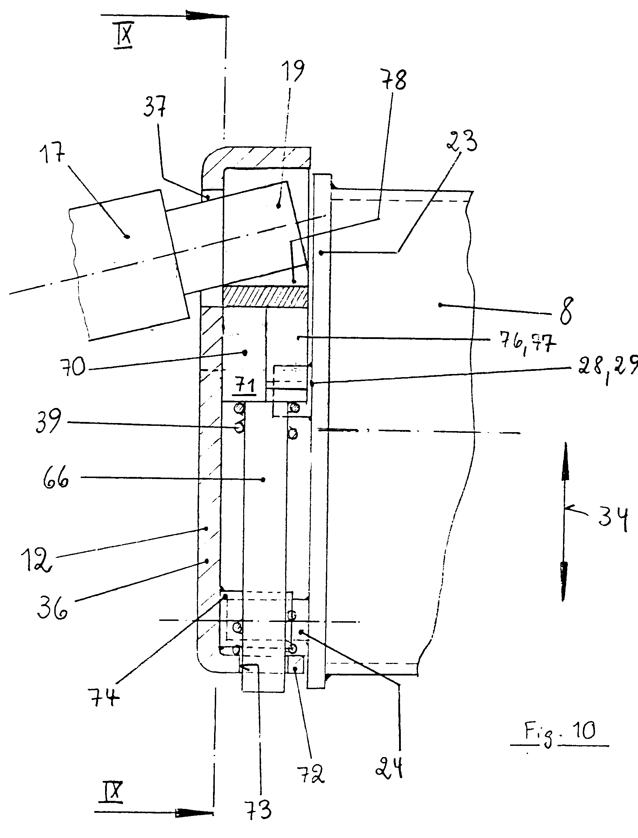

Das in den Fig. 9 und 10 dargestellte Kupplungselement unterscheidet sich von denjenigen der Fig. 8 im wesentlichen durch die Ausgestaltung eines Schiebeelements 70 sowie dessen Lagerung. So besteht das Schiebeelement 70 aus einem plattenartigen Grundkörper 71, an dessen seitlichen Enden - sich wie in Fig. 8 parallel zueinander erstreckend - zylindrische Teile 66 angesetzt sind, durch welche unter Mitwirkung von Federn 39 das Schiebeelement 70 im unbelasteten Zustand des Lagerzapfens 19 in einer solchen Position gehalten ist, in welcher das Kupplungselement entkuppelt ist. Zur Lagerung der zylindrischen Teile 66 sind in dem sich quer erstreckenden Schenkel 72 des Querträgers 12 jeweils Bohrungen 73 eingeformt, welche von den zylindrischen Teilen 66 durchdrungen werden. Zur Führung des Grundkörpers 71 in Richtung der Pfeile 34 können weitere Führungselemente vorgesehen sein. Mit diesen Führungselementen, die beispielsweise als Stege bzw. Flacheisen ausgestaltet sind, die in das U-förmige Profil des Querträgers 12 eingesetzt, beispielsweise eingeschweißt sind und welche Führungsflächen aufweise, die mit dem Schiebeelement 70, insbesondere den Schmalseiten des plattenartigen Grundkörpers 71 zusammenwirken, wird eine Verbesserung der Torsionsmomentübertragung von dem Torsionsrohr 8 auf den Querträger 12 erreicht. Da diese Führungselemente naturgemäß Verschleißflächen bilden, können diese in einfacher, zeichnerisch nicht dargestellter Weise auch derart angeordnet sein, daß das Spiel zwischen diesen und dem Schiebeelement justierbar ist. Man erkennt, daß durch den Grundkörper 71, insbesondere durch dessen Erstreckung in einer Richtung senkrecht zu den Pfeilen 54 in Verbindung mit den genannten Stegen eine stabile Führung des Schiebeelementes 70 und eine günstige Momentübertragung auf den Querträger 12 gegeben ist.

Dem Lagerzapfen 24 gegenüberliegend und diesen aufnehmend ist an der diesem zugekehrten Seite des Steges 36 des Querträgers 12 ein hohlzylinderartiges Lagerelement 74 angeschweißt. In der zeichnerisch dargestellten Stellung kann somit das Torsionsrohr 8 um die Achse des Bolzens 24 bzw. des Lagerelements 74 im wesentlichen frei drehen.

Der Grundkörper 71 trägt auf seiner, der Deckplatte 23 zugekehrten Seite ein Kupplungsteil 75, dessen sich symmetrisch beiderseits der vertikalen Symmetrieachse 27 (Fig.9) erstreckende Kupplungsflächen 76,77 wie bei dem in Fig. 3 gezeigten Ausführungsbeispiel mit Arretierelementen 28,29 zusammenwirken, die an der Deckplatte 23 des Torsionsrohres 8 angeschweißt sind. Die Arretierkörper 28,29 sind in Verbindung mit der Dicke des Grundkörpers 71 sowie des Kupplungsteils 75 derart bemessen, daß durch die Bewegung des Schiebeelementes 70 in Richtung der Pfeile 34 lediglich das Kupplungsteil 75 mit den Arretierkörpern 28,29 in Wechselwirkung tritt. Das Schiebeelement 70 ist an seinem oberseitigen Ende mit einer U-förmigen, der Aufnahme des Lagerzapfens dienenden Lagerschale 78 versehen, welche in dem gezeigten Ausführungsbeispiel sowohl den Grundkörper 71 als auch das Kupplungsteil 75 durchdringt. Im Bedarfsfall kann diese Lagerschale 78, die mit dem Langloch 37 in dem Steg 36 fluchtend angeordnet ist, zur Vermeidung von Kantenpressungen ballig ausgebildet sein.

Erfindungsgemäß ist das Schiebeelement 70 insgesamt derart bemessen, daß - von den unteren Enden der zylindrischen Teile 66 abgesehen - eine vollständige Aufnahme innerhalb des durch den Querträger 12 umgrenzten Raumes gegeben ist. Es ist auf diese Weise in Verbindung mit der Deckplatte 23 ein gewisser mechanischer Schutz der einzelnen Bauteile des erfindungsgemäßen Kupplungselements gegeben.

Die Wirkungsweise des in den Fig. 9 und 10 dargestellten Kupplungselement entspricht im wesentlichen demjenigen der vorangegangenen Ausführungsbeispiele, d.h. es wird bei Belastung des Ringes 17 und damit des Lagerzapfens 19 das Schiebeelement 70 entgegen der Wirkung der Federn 39 nach unten verschoben, wodurch die Kupplungsflächen 76,77 zur Anlage an den Arretierkörpern 28,29 gelangen und auf diese Weise das Torsionsrohr 8 Torsionsmomente aufnehmen kann, so daß eine für eine Kippbewegung der Ladebrücke des jeweiligen Fahrgestellrahmens erforderliche Verwindungssteife eingestellt ist.

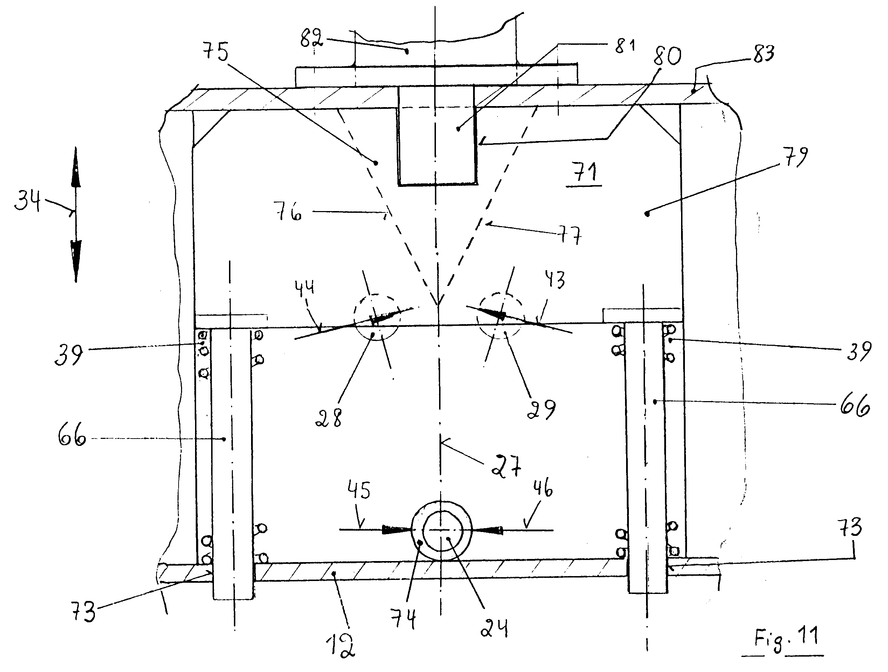

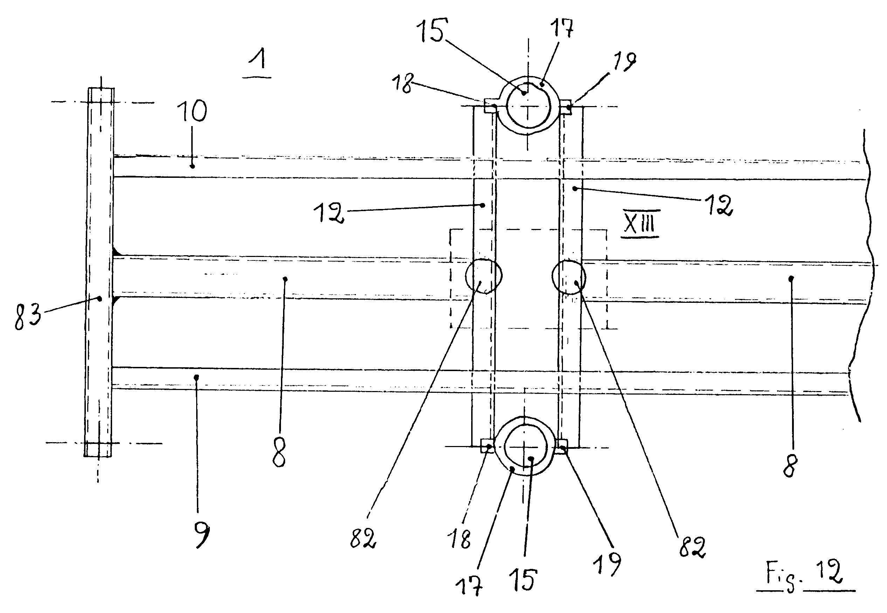

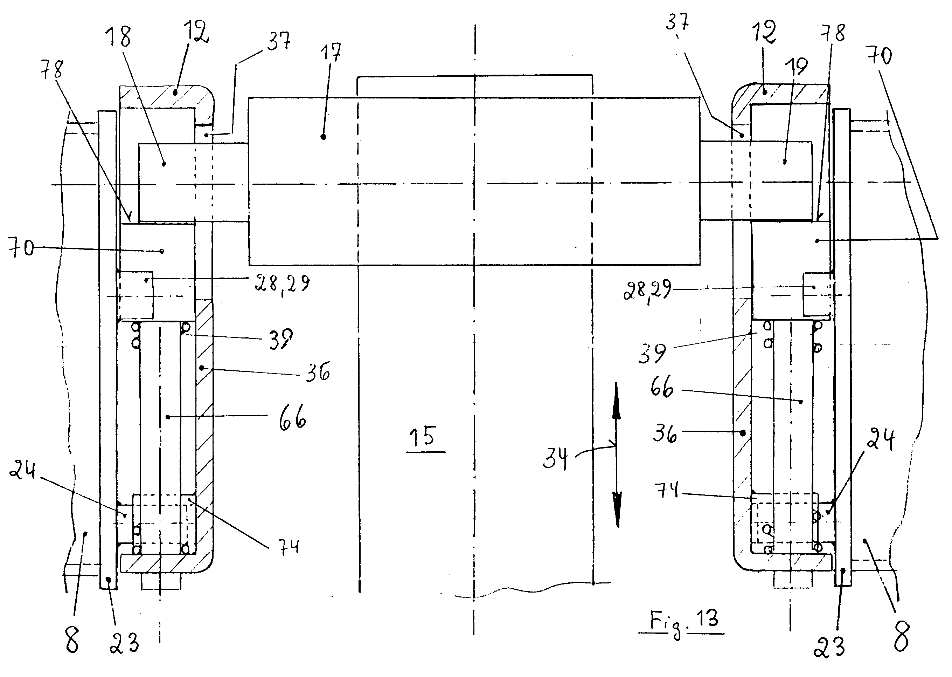

Das in Fig. 11 gezeigte Ausführungsbeispiel entspricht im wesentlichen demjenigen gemäß den Fig. 9 und 10, mit Ausnahme des Schiebeelements 79. So ist dessen Grundkörper mit einer oberseitig offenen Ausnehmung 80 versehen, in welche die Kolbenstange 81 einer zeichnerisch nur angedeuteten Kolben-Zylinder-Einheit 82 hineinragt. Die Gestaltung der Ausnehmung 80 sowie des dieser zugekehrten Endes der Kolbenstange 81 kann grundsätzlich beliebig ausgebildet sein - sie muß lediglich dazu geeignet sein, eine Verschiebebewegung des Schiebeelements 79 in Richtung der Pfeile 34 zu bewirken. Es ist die Kolben-Zylinder-Einheit 82 auf dem oberen Schenkel 83 des Querträgers 12 befestigt, wobei der Zylinder als einfach wirkender Zylinder ausgebildet ist. Der genannte Zylinder wird von dem Druckmittel des in Fig. 11 nicht gezeigten Hubzylinders bzw. der Hubzylinder beaufschlagt, durch welche die Ladebrücke zwecks Abkippens geschwenkt wird, wobei jedoch auf eine zeichnerische Darstellung der diesem Vorgang zugeordneten Druckmittelleitungen verzichtet worden ist. Wesentlich ist hierbei, daß die das Schiebeelement 79 in die in Fig. 11 gezeigte Stellung zurückbewegenden Kräfte durch die Federn 39 aufgebracht werden.

Es entspricht das in Fig. 11 gezeigte Ausführungsbeispiel hinsichtlich seines Aufbaus sowie seiner Wirkungweise im übrigen demjenigen der Fig. 9 und 10, so daß auf eine wiederholte Beschreibung verzichtet werden kann.

In Fig. 12 ist ein Ausführungsbeispiel eines Fahrgestellrahmens 1 gezeigt, der zwei seitlich angeordnete Hubzylinder 15 aufweist, die ihrerseits in Ringen 17 an dem Fahrgestellrahmen nach Art eines Kardangelenks schwenkbar befestigt sind. Es kann sich bei dieser Konfiguration der Hubzylinder beispielsweise um einen an sich bekannten Dreiseitenkipper handeln, dessen Ladebrücke somit nach hinten, nach rechts und nach links abgekippt werden kann.

Wesentlich für das in Fig. 12 gezeigte Ausführungsbeispiel ist, daß im mittleren Bereich des Fahrgestellrahmens 1 mit geringfügigem Abstand voneinander zwei Querträger 12 angeordnet sind, an deren seitlichen Endbereichen die genannten Hubzylinder 15 gelagert sind. Von jedem der beiden Querträger 12 erstreckt sich im mittleren Bereich in Längsrichtung des Fahrgestellrahmens 1 ein Torsionsrohr 8, dessen jeweils eines Ende an dem jeweiligen Querträger 12 mittels eines erfindungsgemäßen schaltbaren Kupplungselements und dessen jeweils anderes Ende an einem an dem jeweiligen Ende des Fahrgestellrahmens angebrachten Querträger 83 angeschweißt ist.

Die beiden, den genannten Querträgern 12 zugeordneten Kupplungselemente sind aus Gründen der zeichnerischen Übersichtlichkeit nicht dargestellt worden. Es handelt sich bei dem gezeigten Ausführungsbeispiel um solche Kupplungselemente, deren Betätigung durch Kolben-Zylinder-Einheiten 82 erfolgt, die in zeichnerisch ebenfalls nicht dargestellter Weise mit dem Druckmittel der Hubzylinder 15 beaufschlagbar sind.

Als besonderer Vorteil ergibt sich aus dieser Ausgestaltung der Erfindung, daß die Verwindungssteife des Fahrgestellrahmens in einfacher Weise durch Zuschalten eines oder beider Torsionsrohre 8 variierbar und somit den gegebenen Bedürfnissen anpaßbar ist. Gerade die Verwendung von Kolben-Zylinder-Einheiten 82 eröffnet in diesem Zusammenhang in einfacher Weise praktisch beliebige Schaltmöglichkeiten, welche stets aus der Beaufschlagung der Hubzylinder 15 abgeleitet werden.

Es kann die gezeigte Ausführungsform Anwendung finden bei geraden Längsträgern 9,10, jedoch auch bei gekröpften Längsträgern.

Die in der Fig. 12 dargestellten Torsionsrohre können anstelle der dort vorgesehenen Kolben-Zylinder-Einheiten 82 auch durch die Lagerzapfen 18, 19 des Kardanringes 17 eines mittig angeordneten Hubzylinders 15 torsionsstarr mit den Querträgern 12 gekuppelt werden.

Fig. 13 zeigt die grundsätzliche Anordnung der erfindungsgemäßen Kupplungselemente für diesen Fall. In den mit ihren Stegen 36 einander zugekehrt angeordneten Querträgern 12 werden zwei im wesentlichen gleichartige Kupplungselemente untergebracht, welche in ihrem Aufbau ihrerseits im wesentlichen dem in den Fig. 9 und 10 dargestellten Ausführungsbeispiel entsprechen. In der zeichnerisch angedeuteten Schaltstellung befindet sich der Hubzylinder 15 in einem unbelasteten Zustand und wird in seiner Position durch die Schiebeelemente 70, die unter der Einwirkung der Federn 39 stehen, gehalten. Sobald ein Kippvorgang eingeleitet wird, ergibt sich ein Absenken der Schiebeelemente 70 entgegen der Rückstellwirkung der Federn 39, so daß die entsprechenden Kupplungsteile in Wechselwirkung mit den Arretierelementen 28,29 treten und eine torsionsstarre Ankopplung beider Torsionsrohre 8 gegeben ist. Grundsätzlich kann im Rahmen eines Querträgers 12 jedoch auch jedes einzelne der gezeigten erfindungsgemäßen Kupplungselemente eingesetzt werden.

Anstelle der in Fig. 13 gezeigten mittigen Anordnung eines Hubzylinders 15 kann die dort gezeigte Ausführungsform grundsätzlich auch bei beidseitig angeordneten Hubzylinder 15 Verwendung finden, wobei lediglich die durch einen Kippvorgang bedingte Schwenkbewegung des bzw. der Zylinder mit sonstigen, nicht hydraulischen oder pneumatischen Mitteln in eine dementsprechende Vertikalbewegung der Schiebeelemente 70 umgesetzt werden müßte.

Die Zeichnungsfiguren 14, 15 zeigen ein Ausführungsbeispiel eines Fahrgestellrahmens 1, dessen vorderer Bereich mit einer Aufnahme 84 für ein Drehgestell versehen ist und an dessen hinteren Querträger 11 das eine Ende eines Torsionsrohres 8 angeschweißt ist, dessen anderes Ende über ein erfindungsgemäßes Kupplungselement mit einem mittleren Querträger 12 kuppelbar ist. Das Kupplungselement ist über eine Kolben-Zylinder-Einheit 82 in oben bereits beschriebener Weise betätigbar, wobei in dem gezeigten Ausführungsbeispiel zwei Hubzylinder 15 seitlich angeordnet sind.

Das Kupplungselement kann grundsätzlich entsprechend den bereits vorstehend beschriebenen Kupplungselementen ausgestaltet sein - es ist lediglich der Zapfen 24, der an einem Ende mit der Deckplatte 23 des Torsionsrohres 8 verschweißt ist, durch eine entsprechende Bohrung in dem Steg 36 des Querträgers 12 hindurchgeführt und ragt seinerseits in ein Rohrelement 85 hinein, dessen eines Ende sich im wesentlichen bis zu dem Querträger 12 erstreckt. Das andere Ende des Rohrelements 85 ist an einem Querträger 86 angeschweißt. Ein Stegblech 87 dient der Erhöhung der Biegesteifigkeit des Rohrelements 85.

Wesentlich ist, daß bei dieser Ausgestaltung des Fahrgestellrahmens 1 sich aus dem Zusammenwirken von Torsionsrohr 8 und Rohrelement 87 eine Erhöhung der Biegesteifigkeit ergibt, nämlich bezüglich einer Biegung um eine Querachse, ebenso wie um eine Hochachse.

Die Wirkungsweise sowie die Eigenschaften des Fahrgestellrahmens gemäß den Ansprüchen 14 und 15 entsprechen im übrigen denjenigen der vorstehend bereits beschriebenen Ausführungsbeispiele.

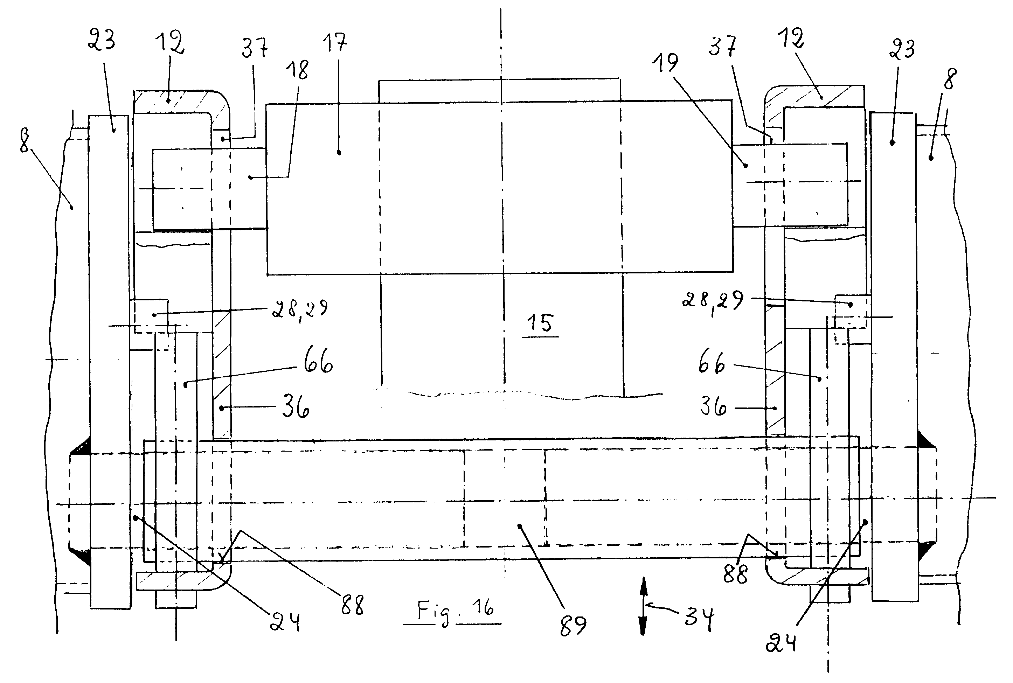

Fig. 16 zeigt die Verknüpfung zweier Torsionsrohre 8 ähnlich der Darstellung gemäß den Fig. 12 und 13, jedoch mit der Maßgabe, daß die Torsionsrohre 8 gleichzeitig als Biegeträger angeordnet sind. Zu diesem Zweck sind die Stege 36 der Querträger 12 in ihren, den Zapfen 24 zugekehrten Stellen mit Bohrungen 88 versehen, durch welche hindurch sich ein Rohrelement 89 erstreckt, in welchem die Zapfen 24 aufgenommen sind. Hinsichtlich einer Biegebeanspruchung in einer Vertikalebene sind somit die Torsionsrohre 8 über das Rohrelement 89 miteinander verbunden, wobei dieses Rohrelement 89 jedoch Verdrehbewegungen der Torsionsrohre 8 um die Achsen der Zapfen 24 zuläßt, so daß sich für das einzelne Torsionselement hinsichtlich einer Verwindung des Fahrgestellrahmens gleiche Einspannbedingungen wie bei den voranstehend bereits beschriebenen Ausführungsbeispielen ergeben. Wird hingegen mittels des Hubzylinders 15 eine Kippbewegung einer Ladebrücke eingeleitet, treten die Arretierkörper 28, 29 mit den entsprechenden Kupplungsflächen der Schiebeelemente 70 in Wechselwirkung, so daß sich im eingekuppelten Zustand neben einer biegesteifen auch eine torsionssteife Verknüpfung der beiden Torsionsrohre 8 miteinander ergibt.

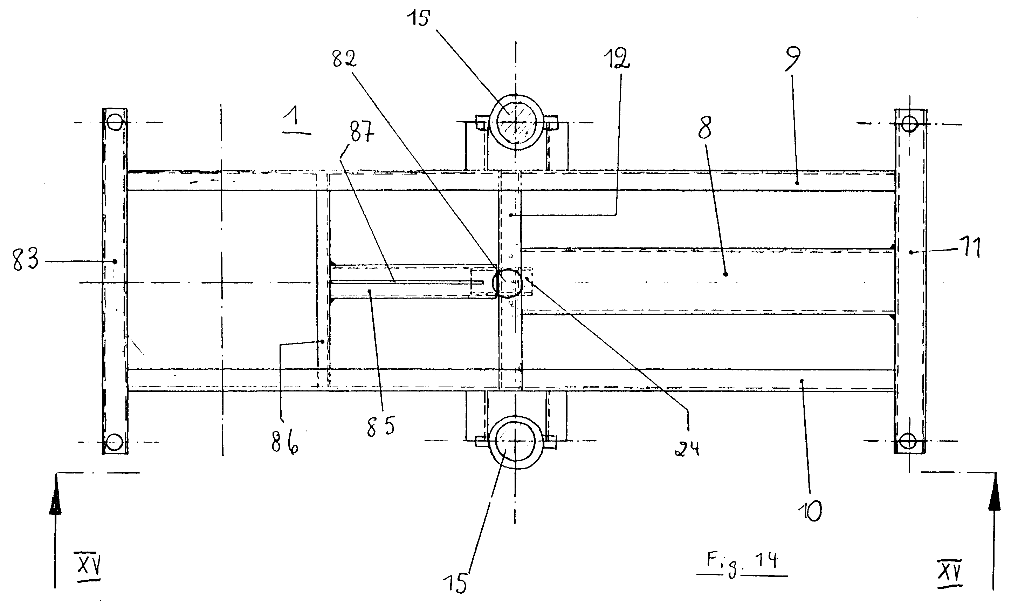

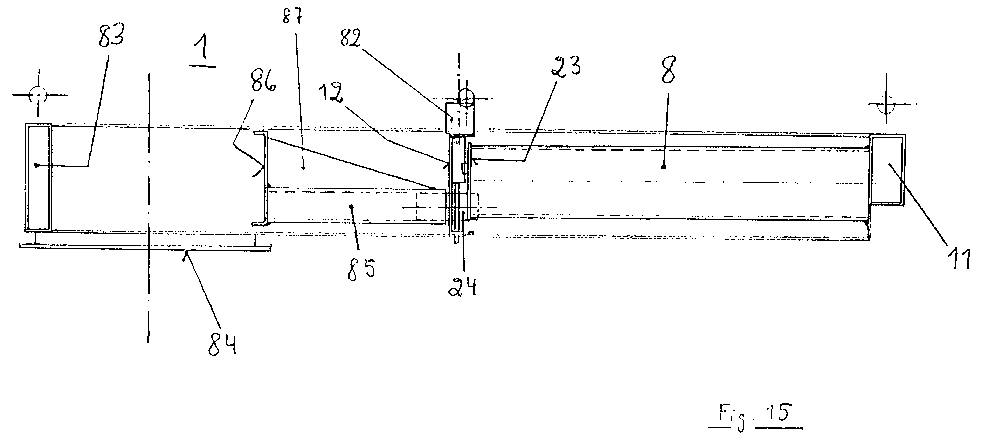

Bei den Ausführungsbeispielen gemäß den Fig. 1, 12, 14 und 15 ist stets an dem rückwärtigen Querträger 11 ein Torsionsrohr 8 mittig angeschweißt. Dies bringt darüber hinaus noch den Vorteil mit sich, daß an diesem Bereich eine Anhängerkupplung angebracht werden kann, ohne daß hier besondere konstruktive Verstärkungsmaßnahmen wie Verstrebungen vorgenommen werden müssen.

## Patentansprüche

1. Fahrgestellrahmen (1) für mit kippbaren Ladeflächen versehene Fahrzeuge,

   - mit wenigstens einem, zur Aufnahme von in dem Fahrgestellrahmen (1) wirksamen Torsionsmomenten ausgestalteten und angeordneten, über zumindest ein Kupplungselement starr mit dem Fahrgestellrahmen (1) verbindbaren, sich mittig bezüglich des Fahrgestellrahmens (1) in dessen Längsrichtung erstreckenden Torsionselement,
   - mit wenigstens einem Hubzylinder (15) zur Bewirkung des Kippvorgangs,
   - wobei das Kupplungselement aus einem fest und einem beweglich angeordneten Bauteil besteht,

   dadurch gekennzeichnet,

   - daß der Hubzylinder (15) an dem Fahrgestellrahmen (1) beweglich, insbesondere kardanisch gelagert ist,
   - daß zumindest ein Lagerungspunkt des Hubzylinders entgegen der Rückstellkraft einer Feder (39,60) nachgiebig gelagert ist und
   - daß die Bewegung dieses Lagerungspunktes kinematisch mit derjenigen des beweglichen Bauteils des Kupplungselements verknüpft ist.

2. Fahrgestellrahmen nach Anspruch 1, dadurch gekennzeichnet, daß der Lagerungspunkt durch einen Lagerzapfen (19) gebildet wird, der einerseits mit dem Hubzylinder (15) und andererseits mit dem beweglichen Bauteil des Kupplungselements in Wirkverbindung steht.

3. Fahrgestellrahmen (1) für mit kippbaren Ladeflächen versehene Fahrzeuge,

   - mit wenigstens einem, zur Aufnahme von in dem Fahrgestellrahmen (1) wirksamen Torsionsmomenten ausgestalteten und angeordneten, über zumindest ein Kupplungselement starr mit dem Fahrgestellrahmen (1) verbindbaren, sich mittig bezüglich des Fahrgestellrahmens (1) in dessen Längsrichtung erstreckenden Torsionselement,
   - mit wenigstens einem Hubzylinder (15) zur Bewirkung des Kippvorgangs,
   - wobei das Kupplungselement aus einem fest und einem beweglich angeordneten Bauteil besteht und
   - wobei zur Betätigung des beweglich angeordneten Bauteils eine Kolben-Zylinder-Einheit (82) vorgesehen ist, deren Steuerdruck vom Hubzylinder (15) abgeleitet ist,
   - dadurch gekennzeichnet,
   - daß das bewegliche Bauteil durch ein formschlüssig mit zumindest einem Arretierkörper (28,29,63) als fest angeordnetem Bauteil zusammenwirkendes Schiebeelement (30,62,70,79) gebildet wird, dessen Kupplungsflächen (41,42,64,65,66,77) in Anlage an dem/den Arretierkörper/Arretierkörpern (28,29,63) bringbar sind,

- daß der/die Arretierkörper (28,29,63) an dem Torsionselement befestigt ist/sind, und zwar in einer Querschnittsebene desselben, wobei in der gleichen Querschnittsebene, und zwar mit Abstand von dem/den Arretierkörper/Arretierkörpern (28,29,63) ein Zapfen (24) befestigt ist, der sich parallel zur Längsachse des Torsionselementes erstreckt und an einem Querträger (12) des Fahrgestelltrahmens (1) gelagert ist, und

- daß das bewegliche Bauteil in einer solchen Richtung bewegbar ist, in der die über den/die Hubzylinder (15) entwickelten Kräfte wirksam sind und daß die, der Betätigung des beweglichen Bauteils dienende Kolben-Zylinder-Einheit (82) an dem Querträger (12) befestigt ist.

4. Fahrgestellrahmen (1) nach einem der vorangegangenen Ansprüche 1 bis 3, dadurch gekennzeichnet, daß dem beweglichen Bauteil zur Momentübertragung Führungselemente zugeordnet sind, die mit dem Fahrgestellrahmen (1) in Verbindung stehen.

5. Fahrgestellrahmen (1) nach einem der Ansprüche 1, 2 oder 4, dadurch gekennzeichnet,

- daß das bewegliche Bauteil durch ein formschlüssig mit zumindest einem Arretierkörper (28,29,63) als fest angeordnetem Bauteil zusammenwirkendes Schiebeelement (30,62,70,79) gebildet wird, dessen Kupplungsflächen (41,42,64,65,66,77) in Anlage an dem/den Arretierkörper/Arretierkörpern (28,29,63) bringbar sind und

- daß das Schiebeelement (30,62,70,79) zumindest aus einem, die Kupplungsflächen (41,42,64,65,76,77) tragenden Kupplungsteil (31,75) und aus wenigstens einem, einstückig mit dem Kupplungsteil (31,75) ausgebildeten, der Führung dienenden zylindrischen Teil (32,66) besteht,

- wobei der Lagerzapfen (19) in einer Öffnung des Kupplungsteils (31) eingesteckt ist und das zylindrische Teil (32,66) in einem, vorzugsweise an dem Fahrgestellrahmen (1) angebrachten Ringlager (33) aufgenommen ist.

6. Fahrgestellrahmen (1) nach Anspruch 5, dadurch gekennzeichnet,

- daß der zylindrische Teil (32,66) von der Feder (39,60) umgeben ist, welche an dem Ringlager (33) bzw. in sonstiger Weise an dem Fahrgestellrahmen (1) einerseits und an dem Kupplungsteil (31,75) andererseits abgestützt ist und

- daß der/die Arretierkörper (28,29,63) an dem Torsionselement befestigt ist/sind, und zwar in einer Querschnittsebene desselben, wobei in der gleichen Querschnittsebene, und zwar mit Abstand von dem/den Arretierkörper/Arretierkörpern (28,29,63) ein Zapfen (24) befestigt ist, der sich parallel zur Längsachse des Torsionselements erstreckt und an einem Querträger (12) des Fahrgestellrahmens (1) gelagert ist.

7. Fahrgestellrahmen nach einem der vorangegangenen Ansprüche 5 oder 6, dadurch gekennzeichnet, daß der mit dem Schiebeelement (30,62,70,79) in Wirkverbindung stehende Lagerzapfen (19) in einem Langloch (37) des Fahrgestellrahmens (1) geführt ist, dessen Längsachse senkrecht zur Richtung der dem zu übertragenden Torsionsmoment zuzuordnenden Kräfte verläuft.

8. Fahrgestellrahmen nach einem der vorangegangenen Ansprüche 5 bis 7, dadurch gekennzeichnet, daß das Kupplungsteil (31,75) in Verbindung mit den Arretierkörpern (28,29,63) so ausgestaltet und angeordnet ist, daß die freie Drehung des Torsionselements gegenüber dem Fahrgestellrahmen (1) winkelbegrenzt ist.

9. Fahrgestellrahmen nach einem der vorangegangenen Ansprüche 1 bis 8,

- dadurch gekennzeichnet,
- daß das bewegliche Bauteil zumindest ein reibschlüssig mit dem Torsionselement in Eingriff bringbares Funktionselement ist, welches mit dem Hubzylinder (15) in steuerungstechnischer Verbindung steht,

- daß das reibschlüssig wirkende Funktionselement zumindest einen Reibbelagträger (52) aufweist, der in einer senkrecht zur Längsachse des Torsionselements verlaufenden Querschnittsebene bewegbar angeordnet ist und

- daß das Funktionselement zwei, im wesentlichen in einer senkrecht zur Längsachse des Torsionselements gelegenen Ebene mit Abstand voneinander angeordnete, der Übertragung des Torsionsmoments auf dem Fahrgestellrahmen (1) dienende Einrichtungen aufweist.

10. Fahrgestellrahmen nach Anspruch 9, dadurch gekennzeichnet,

  - daß das Funktionselement ein Gelenkviereck ist, wobei an zwei, einander diametral gegenüberliegenden Gelenkpunkten Reibbelagträger (32) befestigt sind,
  - daß die eine der beiden Einrichtungen zur Übertragung des Torsionsmoments durch einen fest an dem Fahrgestellrahmen (1) angebrachten Lagerbolzen (51) und die andere derselben durch den Lagerzapfen (19) gebildet wird, wobei der Lagerbolzen (51) und der Lagerzapfen (19) jeweils einen Gelenkpunkt des Gelenkvierecks definieren und
  - daß der Lagerzapfen (19) in einem Langloch (37) des Fahrgestellrahmens (1) geführt ist, dessen Längsachse in Richtung einer gedachten Verbindungslinie zwischen dem Lagerzapfen (19) und dem Lagerbolzen (51) verläuft.

11. Fahrgestellrahmen nach einem der Ansprüche 9 oder 10, dadurch gekennzeichnet,

  - daß das reibschlüssige Funktionselement in Verbindung mit dem diesem zugekehrten Bereich des Torsionselements so ausgestaltet und angeordnet ist, daß die freie Drehung des Torsionselements gegenüber dem Fahrgestellrahmen (1) winkelbegrenzt ist,
  - daß das Gelenkviereck im wesentlichen innerhalb des als Rohr ausgestalteten Endbereichs des Torsionselements angeordnet ist,
  - daß die Innenmantelfläche des Rohres als Gegenwirkfläche für die Reibbelagträger (52) verwendet wird und
  - daß der Umfang des Rohres im Bereich der beiden Einrichtungen zur Torsionsmomentübertragung mit Ausschnitten (55,56) versehen ist, durch deren Winkelerstreckung das Maß festgelegt ist, innerhalb welchem das Rohr gegenüber den an dem Fahrgestellrahmen (1) angebrachten Gelenkviereck frei drehbar ist.

12. Fahrgestellrahmen nach einem der vorangegangenen Ansprüche 7 bis 11, dadurch gekennzeichnet,

  - daß das Torsionselement wenigstens ein an seinem einen Ende an dem Fahrgestellrahmen (1) fest angebrachtes und an seinem anderen Ende über das Kupplungselement mit dem Fahrgestellrahmen (1) starr verbindbares Torsionsrohr (8) ist und
  - daß das der Torsionsmomentübertragung dienende Langloch (37) einerseits sowie der Lagerbolzen (51) andererseits an einem Querträger (12) des Fahrgestellrahmens (1) angeordnet sind.

13. Fahrgestellrahmen nach einem der vorangegangenen Ansprüche 5 bis 12, dadurch gekennzeichnet, daß dem Schiebeelement (62,70,79) zwei zueinander parallel geschaltete Federn (39) zugeordnet sind, die symmetrisch beiderseits einer vertikalen Symmetrieachse (27) des Schiebeelements angeordnet sind.

14. Fahrgestellrahmen nach Anspruch 13, dadurch gekennzeichnet, daß der Querträger (12) als U-Profilträger ausgebildet ist, innerhalb welchem das Schiebeelement (62,70,79) angeordnet ist.

15. Fahrgestellrahmen nach Anspruch 13 oder 14, dadurch gekennzeichnet, daß die Kupplungsflächen (41,42,64,65,76,77) des Schiebeelements (30,62,70,79) symmetrisch beiderseits der genannten Symmetrieachse (27) verlaufen.

16. Fahrgestellrahmen nach einem der vorangegangenen Ansprüche 13 bis 15, dadurch gekennzeichnet, daß der Zapfen (24) zwischen den, die Federn (39) führenden zylindrischen Teilen (66) des Schiebeelements (62,70,79) angeordnet ist.

17. Fahrgestellrahmen nach einem der vorangegangenen Ansprüche 12 bis 16, dadurch gekennzeichnet, daß wenigstens zwei Torsionsrohre (8) vorgesehen sind, die jeweils an ihrem einen Ende fest und an ihrem anderen Ende über ein Kupplungselement torsionsstarr mit dem Fahrgestellrahmen (1) verbindbar sind.

18. Fahrgestellrahmen nach Anspruch 17, dadurch gekennzeichnet, daß die den Torsionsrohren (8) zugeordneten Kupplungselemente voneinander unabhängig schaltbar ausgebildet sind.

19. Fahrgestellrahmen nach Anspruch 17, dadurch gekennzeichnet, daß die den Torsionsrohren zugeordneten Kupplungselemente gemeinsam schaltbar sind.

**20.** Fahrgestellrahmen nach einem der vorangegangenen Ansprüche 17 bis 19, dadurch gekennzeichnet, daß das Torsionsrohr (8)/die Torsionsrohre (8) in einer zur Aufnahme von Biegemomenten geeigneten Weise angeordnet sind.

**21.** Fahrgestellrahmen nach Anspruch 20, dadurch gekennzeichnet, daß jeweils zwei Torsionsrohre (8) an ihren, den Kupplungselementen zugekehrten Enden zur Übertragung von Biegemomenten miteinander in Verbindung stehen, wobei die Verbindung vorzugsweise über ein Rohrelement (89) erfolgt, in welchem die Zapfen (24) der Torsionsrohre (8) ausgenommen sind.

**22.** Fahrgestellrahmen nach Anspruch 20, dadurch gekennzeichnet, daß ein Torsionsrohr (8) mit einem Biegeträger hinsichtlich der Übertragung von Biegemomenten in Wirkverbindung steht, wobei die Verknüpfung mit dem Biegeträger vorzugsweise über den Zapfen (24) erfolgt.

**23.** Fahrgestellrahmen nach einem der vorangegangenen Ansprüche 12 bis 22, dadurch gekennzeichnet, daß ein sich in Längsrichtung erstreckendes Torsionsrohr (8) an seinem einen Ende an dem hinteren Querträger (11) vorzugsweise mittig angeschweißt und an seinem anderen Ende mit dem Querträger (12) über das Kupplungselement in Verbindung steht.

**Claims**

**1.** Chassis frame (1) for vehicles provided with tiltable loading surfaces,

- with at least one torsion element which is constructed and arranged so as to absorb torsional moments acting in the chassis frame (1), can be rigidly connected to the chassis frame by means of at least one coupling element and extends centrally with respect to the chassis frame (1) in the longitudinal direction thereof,
- and with at least one lifting cylinder (15) to effect the tilting operation,
- in which the coupling element consists of one fixed and one movable component,

characterised in that

- the lifting cylinder (15) is mounted movably, particularly on gimbals, on the chassis frame (1),

- at last one bearing point of the lifting cylinder is flexibly mounted against the restoring force of a spring (39, 60), and
- the movement of this bearing point is linked kinematically to that of the movable component of the coupling element.

**2.** Chassis frame as claimed in claim 1, characterised in that the bearing point is formed by a journal which is operatively connected on the one hand to the lifting cylinder (15) and on the other hand to the movable component of the coupling element.

**3.** Chassis frame (1) for vehicles provided with tiltable loading surfaces,

- with at least one torsion element which is constructed and arranged so as to absorb torsional moments acting in the chassis frame (1), can be rigidly connected to the chassis frame by means of at least one coupling element and extends centrally with respect to the chassis frame (1) in the longitudinal direction thereof,
- and with at least one lifting cylinder (15) to effect the tilting operation,
- in which the coupling element consists of one fixed and one movable component and
- in which a piston-cylinder unit (82), the control pressure of which is derived from the lifting cylinder (15), is provided for actuation of the movably arranged component,

characterised in that

- the movable component is formed by a slide element (30, 62, 70, 79) which cooperates in a form-locking manner with at least one stop element (30, 62, 70, 79) as the fixed component, the coupling surfaces (41, 42, 64, 65, 66, 77) of this slide element being capable of being brought into abutment on the stop element(s) (28, 29, 63),
- the stop element(s) (20, 29, 63) is/are fixed on the torsion element in a cross-sectional plane thereof, and a lug (24) which extends parallel to the longitudinal axis of the torsion element and is mounted on a cross-member (12) of the chassis frame (1) is fixed in the same cross-sectional plane at a distance from the stop element(s) (28, 29, 63), and
- the movable component is movable in a

14

direction in which the forces developed by means of the lifting cylinder(s) (15) are effective, and the piston-cylinder unit (82) which serves for actuation of the movable component is fixed on the cross-member (12).

4. Chassis frame (1) as claimed in one of the preceding claims 1 to 3, characterised in that guide elements which are connected to the chassis frame (1) are co-ordinated with the movable component.

5. Chassis frame (1) as claimed in one of claims 1, 2 or 4, characterised in that

   - the movable component is formed by a slide element (30, 62, 70, 79) which co-operates in a form-locking manner with at least one stop element (30, 62, 70, 79) as the fixed component, the coupling surfaces (41, 42, 64, 65, 66, 77) of this slide element being capable of being brought into abutment on the stop element(s) (28, 29, 63), and
   - the slide element (30, 62, 70, 79) at least consists of a coupling part (31, 75) which bears the coupling surfaces (41, 42, 64, 65, 76, 77) and at least one cylindrical part (32, 66) which is constructed integrally with the coupling part (31, 75) and serves for guiding,
   - in which the journal (19) is inserted in an opening in the coupling part (31) and the cylindrical part (32, 66) is received in a collar (33) which is preferably attached to the chassis frame (1).

6. Chassis frame (1) as claimed in claim 5, characterised in that

   - the cylindrical part (32, 66) is surrounded by the spring (39, 60) which is supported on the collar (33) or in some other way on the chassis frame (1) On the one hand and on the coupling part (31, 75) on the other hand, and
   - the stop element(s) (28, 29, 63) is/are fixed on the torsion element in a cross-sectional plane thereof, and a lug (24) which extends parallel to the longitudinal axis of the torsion element and is mounted on a cross-member (12) of the chassis frame (1) is fixed in the same cross-sectional plane at a distance from the stop element(s) (28, 29, 63).

7. Chassis frame as claimed in one of the preceding claims 5 or 6, characterised in that the journal (19) which is operatively connected to the slide element (30, 62, 70, 79) is guided in a slot (37) in the chassis frame (1), the longitudinal axis of which runs perpendicular to the direction of the forces to be co-ordinated with the torsional moment to be transferred.

8. Chassis frame as claimed in one of the preceding claims 5 to 7, characterised in that the coupling part (31, 75) in combination with the stop elements (28, 29, 63) is constructed and arranged in such a way that the free rotation of the torsion element with respect to the chassis frame (1) is limited as regards angle.

9. Chassis frame as claimed in one of the preceding claims 1 to 8, characterised in that

   - the movable component is at least a functional element which is capable of being brought frictionally into engagement with the torsion element and which is connected for control purposes to the lifting cylinder (15),
   - that the frictionally acting functional element has at least one friction lining support (52) which is arranged movably in a cross-sectional plane running perpendicular to the longitudinal axis of the torsion element, and
   - the functional element has two arrangements which are arranged at a distance from one another substantially in a plane lying perpendicular to the longitudinal axis of the torsion element and serve for transfer of the torsional moment to the chassis frame (1).

10. Chassis frame as claimed in claim 9, characterised in that

    - the functional element is a link quadrilateral, with friction lining supports (32) fixed on to link points which lie diametrally opposite one another,
    - one of the two arrangements for transfer of the torsional moment to the chassis frame (1) is formed by a bearing bolt (51) which is fixed on the chassis frame (1) and the other arrangement is formed by the journal (19), and the bearing bolt (51) and the journal (19) each define a link point of the link quadrilateral, and
    - the journal (19) is guided in a slot (37) in the chassis frame (1) the longitudinal axis of which runs in the direction of an imaginary connecting line between the journal (19) and the bearing bolt (51).

**11.** Chassis frame as claimed in one of claims 9 or 10, characterised in that

- the frictional functional element in combination with the region of the torsion element facing it is constructed and arranged in such a way that the free rotation of the torsion element with respect to the chassis frame (1) is limited as regards angle,
- the link quadrilateral is arranged substantially within the tubular end region of the torsion element,
- the inner surface of the tube is used as a reciprocating surface for the friction lining supports (52), and
- the periphery of the tube in the region of the two arrangements for transfer of the torsional moment is provided with cutouts (55, 56) such that their angular extension determines the dimension within which the tube is freely rotatable with respect to the link quadrilateral mounted on the chassis frame (1).

**12.** Chassis frame as claimed in one of the preceding claims 7 to 11, characterised in that

- the torsion element is at least one torsion tube (8) which is fixed at one end to the chassis frame (1) and at its other end is rigidly connected by means of the coupling element to the chassis frame (1), and
- the slot (37) which serves for transfer of the torsional moment on the one hand and the bearing bolt (51) on the other hand are arranged on a cross-member (12) of the chassis frame (1).

**13.** Chassis frame as claimed in one of the preceding claims 5 to 12, characterised in that two springs which are arranged parallel to one another and are arranged symmetrically on both sides of a vertical axis of symmetry (27) of the slide element (62, 70, 79) are co-ordinated with the slide element.

**14.** Chassis frame as claimed in claim 13, characterised in that the cross-member (12) is constructed as a U-profile support within which the slide element (62, 70, 79) is arranged.

**15.** Chassis frame as claimed in claims 13 or 14, characterised in that the coupling surfaces (41, 42, 64, 65, 76, 77) of the slide element (30, 62, 70, 79) run symmetrically on both sides of the said axis of symmetry (27).

**16.** Chassis frame as claimed in one of the preceding claims 13 to 15, characterised in that the lug (24) is arranged between the cylindrical parts (66) of the slide element (62, 70, 79) which guide the springs (39).

**17.** Chassis frame as claimed in one of the preceding claims 12 to 16, characterised in that at least two torsion tubes (8) are provided, each of which is capable of being connected to the chassis frame (1) so that it is fixed at one end and connected at the other end by means of the coupling element so that it is fixed against torsion.

**18.** Chassis frame as claimed in claim 17, characterised in that the coupling elements co-ordinated with the torsion tubes (8) are constructed so that they can be actuated independently of one another.

**19.** Chassis frame as claimed in claim 17, characterised in that the coupling elements co-ordinated with the torsion tubes can be actuated together.

**20.** Chassis frame as claimed in one of the preceding claims 17 to 19, characterised in that the torsion tube(s) (8) is/are arranged in a manner suitable for absorption of bending moments.

**21.** Chassis frame as claimed in claim 20, characterised in that in each case two torsion tubes (8) are connected to one another at their ends facing the coupling elements for the transfer of bending moments, the connection preferably being made by means of a tubular element (89) in which the lugs (24) of the torsion tubes (8) are received.

**22.** Chassis frame as claimed in claim 20, characterised in that a torsion tube (8) is operatively connected to a bending support with a view to transfer of bending moments, the connection to the bending support preferably being made by means of the lug (24).

**23.** Chassis frame as claimed in one of the preceding claims 12 to 22, characterised in that a torsion tube (8) extending in the longitudinal direction has one end welded preferably centrally on the rear cross-member (11) and its other end connected to the cross-member (12) by means of the coupling element.

**Revendications**

1. Cadre de châssis (1) pour véhicules munis de plate-formes de chargement basculantes,
    - avec au moins un élément de torsion conçu et disposé pour absorber les moments de torsion agissant dans le cadre de châssis (1), cet élément pouvant être relié rigidement par l'intermédiaire d'au moins un élément d'accouplement au cadre de châssis (1) et étant situé de manière centrale par rapport au cadre de châssis (1) suivant le sens longitudinal de celui-ci,
    - avec au moins un vérin de levage (15) pour effectuer l'opération de basculement,
    - l'élément d'accouplement consistant en une partie fixe et une partie montée mobile,
    caractérisé en ce que le vérin de levage (15) est monté mobile sur le cadre de châssis (1), en particulier à la Cardan, en ce qu'au moins un point d'appui du vérin de levage est monté souple contre la force de rappel d'un ressort (39,60), et en ce que le mouvement de ce point d'appui est lié de manière cinématique avec celui de la partie mobile de l'élément d'accouplement.

2. Cadre de châssis suivant la revendication 1, caractérisé en ce que le point d'appui est constitué par un tourillon (19) qui coopère d'une part avec le vérin de levage (15) et d'autre part avec la partie mobile de l'élément d'accouplement.

3. Cadre de châssis (1) pour des véhicules munis de plate-formes de chargement basculantes,
    - avec au moins un élément de torsion conçu et disposé pour absorber les moments de torsion agissant dans le cadre de châssis (1), cet élément pouvant être relié rigidement par l'intermédiaire d'au moins un élément d'accouplement au cadre de châssis (1) et étant situé de manière centrale par rapport au cadre de châssis (1) suivant le sens longitudinal de celui-ci,
    - avec au moins un vérin de levage (15) pour effectuer l'opération de basculement,
    - l'élément d'accouplement consistant en une partie fixe et en une partie montée mobile,
        une unité de piston et cylindre (82), dont la pression de commande est dérivée du vérin de levage (15) étant prévue pour actionner la partie montée mobile,
    - caractérisé en ce que, la partie mobile est constituée par un élément coulissant (30, 62, 70, 79) coopérant à engagement positif avec au moins un corps d'arrêt (28, 29, 63) en tant que partie montée fixe, les surfaces d'accouplement (41, 42, 64, 65, 66, 77) de cet élément coulissant pouvant venir en appui contre le ou les corps d'arrêt (28, 29, 63), en ce que
    - le ou les corps d'arrêt (28, 29, 63) est/sont fixé(s) sur l'élément de torsion et ce, dans un plan de section transversale de celui-ci, un pivot (24) fixé dans le même plan de section transversale avec un écart par rapport au(x) corps d'arrêt (28, 29, 63) s'étendant parallèlement à l'axe longitudinal de l'élément de torsion et étant monté sur une traverse (12) du cadre de châssis (1), et en ce que
    - la partie mobile peut être déplacée dans une direction dans laquelle les forces développées par l'intermédiaire du ou des vérin(s) de levage (15) sont actives et en ce que l'unité de piston et cylindre (82) servant à actionner la partie mobile est fixée sur la traverse (12).

4. Cadre de châssis (1) suivant l'une des revendications précédentes, caractérisé en ce que des éléments-guides qui communiquent avec le cadre de châssis (1), sont associés à la partie mobile pour le transmission du moment.

5. Cadre de châssis (1) suivant l'une des revendications 1, 2 ou 4, caractérisé en ce que
    - la partie mobile est constituée par un élément coulissant (30, 62, 70, 79) coopérant à engagement positif avec au moins un corps d'arrêt (28, 29, 63) en tant que partie montée fixe, les surfaces d'accouplement (41, 42, 64, 66, 77) de cet élément coulissant pouvant venir en appui contre le ou les corps d'arrêt (28, 29, 63), et en ce que
    - l'élément coulissant (30, 62, 70, 79) se compose au moins d'un demi-accouplement (31, 75) portant les surfaces d' accouplement (41, 42, 64, 65, 76, 77) et d'au moins une partie cylindrique (32, 66) servant de guidage et conçue d un seul tenant avec le demi-accouplement (31, 75),
    - le tourillon (19) étant enfoncé dans une ouverture du demi-accouplement (31) et la partie cylindrique (32, 66) étant logée dans un support annulaire (33) monté de préférence sur le cadre de châssis (1).

**6.** Cadre de châssis (1) suivant la revendication 5, caractérisé en ce que
- la partie cylindrique (32, 66) est entourée par le ressort (39, 60) qui s'appuie d'une part sur le support annulaire (33) ou d'une manière quelconque sur le cadre de châssis (1), et d'autre part sur le demi-accouplement (31, 75), et en ce que
- le ou les corps d'arrêt (28, 29, 63) est/sont fixé(s) sur l'élément de torsion et ce, dans un plan de section transversale de celui-ci, un pivot (24) fixé dans le même plan de section transversale avec un écart par rapport au(x) corps d'arrêt (28, 29, 63) s'étendant parallèlement à l'axe longitudinal de l'élément de torsion et étant monté sur une traverse (12) du cadre de châssis (1).

**7.** Cadre de châssis suivant l'une des revendications 5 ou 6, caractérisé en ce que le tourillon (19) qui coopère avec l'élément coulissant (30, 62, 70, 79) est guidé dans un trou oblong (37) du cadre de châssis (1), dont l'axe longitudinal s'étend perpendiculairement à la direction des forces à associer au moment de torsion à transmettre.

**8.** Cadre de châssis suivant l'une des revendications 5 à 7, caractérisé en ce que le demi-accouplement (31, 75) est configuré et disposé en liaison avec les corps d'arrêt (28, 29, 63) de telle manière que la rotation libre de l'élément de torsion soit limitée angulairement par rapport au cadre de châssis (1).

**9.** Cadre de châssis suivant l'une des revendications précédentes,
- caractérisé en ce que, la partie mobile est au moins un élément fonctionnel qui peut entrer en prise par friction avec l'élément de torsion et qui est reliée, quant à la technique de commande, au vérin de levage (15), en ce que,
- l'élément fonctionnel agissant par friction présente au moins un support de garniture de friction (52) qui est placé mobile dans un plan de section transversale perpendiculaire à l'axe longitudinal de l'élément de torsion, et en ce que
- l'élément fonctionnel présente deux dispositifs situés, avec un écart entre eux sensiblement dans un plan perpendiculaire à l'axe longitudinal de l'élément de torsion, qui servent à transmettre le moment de torsion au cadre de châssis (1).

**10.** Cadre de châssis suivant la revendication 9, caractérisé en ce que
- l'élément fonctionnel est un quadrilatère articulé, des supports de garniture de friction (32) étant fixés sur deux points d'articulation diamétralement opposés, en ce que
- l'un des deux dispositifs destinés à transmettre le moment de torsion est constitué par un axe (51) fixé sur le cadre de châssis (1) et l'autre de ces dispositifs est constitué par le tourillon (19), l'axe (51) et le tourillon (19) définissant respectivement un point d'articulation du quadrilatère articulé, et en ce que
- le tourillon (19) est guidé dans un trou oblong (37) du cadre de châssis (1), dont l'axe longitudinal se situe dans la direction d'une ligne de jonction imaginaire entre le tourillon (19) et l'axe (51).

**11.** Cadre de châssis suivant l'une des revendications 9 ou 10, caractérisé en ce que
- l'élément fonctionnel est configuré et disposé de telle manière, dans sa relation de friction avec la zone de l'élément de torsion qui lui est adjacente, que la rotation libre de l'élément de torsion soit limitée angulairement par rapport au cadre de châssis (1), en ce que
- le quadrilatère articulé est sensiblement placé à l'intérieur de la zone d'extrémité de forme tubulaire de l'élément de torsion, en ce que
- la surface interne du tube est utilisée comme surface antagoniste pour le support de garniture de friction (52), et en ce que
- la périphérie du tube est munie d'entailles (55, 56) dans la zone des deux dispositifs pour la transmission du moment de torsion, l'étendue angulaire de ces entailles permettant de déterminer dans quelle mesure le tube peut librement tourner par rapport au quadrilatère articulé monté sur le cadre de châssis (1).

**12.** Cadre de châssis suivant l'une des revendications 7 à 11, caractérisé en ce que
- l'élément de torsion est au moins un tube de torsion (8) fixé par une de ses extrémités au cadre de châssis (1) et qui peut être relié rigidement par son autre extrémité au cadre de châssis (1) par l'intermédiaire de l'élément d'accouplement, et en ce que d'une part l'axe (51), et d'autre part le tourillon (19) relié à une traverse (12) du cadre de châssis (1), sont disposés suivant le trou oblong (37) servant à la transmission du moment de torsion

13. Cadre de châssis suivant l'une des revendications 5 à 12, caractérisé en ce que deux ressorts (39) montés parallèles entre eux sont associés à l'élément coulissant (62, 70, 79), ces ressorts étant placés symétriquement de part et d'autre d'un axe de symétrie vertical (27) de l'élément coulissant.

14. Cadre de châssis suivant la revendication 13, caractérisé en ce que la traverse (12) est conçue sous forme de poutre profilée en U à l'intérieur de laquelle est placé l'élément coulissant (62, 70, 79).

15. Cadre de châssis suivant la revendication 13 ou 14, caractérisé en ce que les surfaces d'accouplement (41, 42, 64, 65, 76, 77) de l'élément coulissant (30, 62, 70, 79) s'étendent symétriquement de part et d'autre dudit axe de symétrie (27).

16. Cadre de châssis suivant l'une des revendications 13 à 15, caractérisé en ce que le pivot (24) est placé entre des parties cylindriques (66) de l'élément coulissant (62, 70, 79) qui guident des ressorts (39).

17. Cadre de châssis suivant l'une des revendications 12 à 16, caractérisé en ce qu'au moins deux tubes de torsion (8) sont prévus, qui sont chacun fixes à une de leurs extrémités et qui peuvent être reliés rigidement par leur autre extrémité au cadre de châssis (1) par l'intermédiaire d'un élément d'accouplement.

18. Cadre de châssis suivant la revendication 17, caractérisé en ce que les éléments d'accouplement adjoints aux tubes de torsion (8) sont conçus de manière à être embrayables indépendamment les uns des autres.

19. Cadre de châssis suivant la revendication 17, caractérisé en ce que les éléments d'accouplement adjoints aux tubes de torsion sont embrayables en commun.

20. Cadre de châssis suivant l'une des revendications précédentes 17 à 19, caractérisé en ce que le ou les tube(s) de torsion (8) sont disposés d'une manière appropriée pour absorber les moments de flexion.

21. Cadre de châssis suivant la revendication 20, caractérisé en ce que chaque fois deux tubes de torsion (8) sont reliés entre eux à leurs extrémités adjacentes aux éléments d'accouplement pour la transmission des moments de flexion, la liaison étant de préférence effectuée par l'intermédiaire d'un élément tubulaire (89) dans lequel sont logés les pivots (24) des tubes de torsion (8).

22. Cadre de châssis suivant la revendication 20, caractérisé en ce qu'un tube de torsion (8) coopère avec une poutre sollicitée en flexion en ce qui concerne la transmission des moments de flexion, la liaison avec la poutre sollicitée en flexion se faisant de préférence par l'intermédiaire du pivot (24).

23. Cadre de châssis suivant l'une des revendications 12 à 22, caractérisé en ce qu'un tube de torsion (8) s'étendant dans le sens longitudinal est soudé par une de ses extrémités sur la traverse arrière (11), de préférence au milieu et qu'il est lié par son autre extrémité à la traverse (12) par l'intermédiaire de l'élément d'accouplement.

Fig. 1

EP 0 282 983 B1

FIG. 2

# FIG.3

Fig. 4

Fig. 5

VII

12

17

19

37

49

36

8

48

52

14

49

50

51

57

Fig. 6

Fig. 7

Fig. 8

Fig. 9

EP 0 282 983 B1

Fig. 10

Fig. 11

Fig. 12

Fig.13

Fig. 14

Fig. 15

Fig. 16